(19) Europäisches Patentamt
European Patent Office
Office européen des brevets

(11) **EP 4 521 696 A1**

(12) **EUROPEAN PATENT APPLICATION**

(43) Date of publication:
**12.03.2025 Bulletin 2025/11**

(21) Application number: **24199416.9**

(22) Date of filing: **10.09.2024**

(51) International Patent Classification (IPC):
**H04L 41/0833** (2022.01) **H04L 41/00** (2022.01)
**H04L 43/0811** (2022.01) **H04L 12/12** (2006.01)
**H04L 41/06** (2022.01) **H04L 41/16** (2022.01)

(52) Cooperative Patent Classification (CPC):
**H04L 41/0833; H04L 12/12; H04L 41/24;**
**H04L 43/0811;** H04L 41/06; H04L 41/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.09.2023 IN 202341060923
03.09.2024 US 202418823447**

(71) Applicant: **Juniper Networks, Inc.
Sunnyvale, CA 94089 (US)**

(72) Inventors:
• **KOMMULA, Raja
Sunnyvale, 94089 (US)**

• **SATYANARAYANA, Vyasraj
Sunnyvale, 94089 (US)**
• **GHOSH, Sandip Kumar
Sunnyvale, 94089 (US)**
• **SUNKADA, Ganesh Byagoti Matad
Sunnyvale, 94089 (US)**
• **JAIN, Kapil
Sunnyvale, 94089 (US)**
• **YAVATKAR, Raj
Sunnyvale, 94089 (US)**

(74) Representative: **D Young & Co LLP
3 Noble Street
London EC2V 7BQ (GB)**

(54) **ADAPTIVE VISUAL INDICATORS CONTROLLER**

(57) In some examples, a computing system includes a memory and programmable processors in communication with the memory. The computing system is configured to obtain network information from a network device within a datacenter, wherein the network device includes at least one visual indicator. The computing system is further configured to determine a network event based on the network information. The computing system is further configured to instruct, based on the network event, the network device to configure the at least one visual indicator as active or inactive.

FIG. 1

EP 4 521 696 A1

## Description

This application claims the benefit of IN Provisional Patent Application No. 202341060923, filed 11 September 2023, and also of US Patent Application no 18/823,447, filed 3 September 2024, the entire contents of which are incorporated herein by reference.

## TECHNICAL FIELD

This disclosure relates to computer networks and, more specifically, to improving energy efficiency in computer networks.

## BACKGROUND

In a typical cloud data center environment, there is a large collection of interconnected servers that provide computing and/or storage capacity to run various applications. A data center may comprise a facility that hosts applications and services for subscribers, i.e., customers of data center. The data center may, for example, host all of the infrastructure equipment, such as networking and storage systems, redundant power supplies, and environmental controls. In a typical data center, clusters of storage servers and application servers (compute nodes) are interconnected via high-speed switch fabric provided by one or more tiers of physical network switches and routers. More sophisticated data centers provide infrastructure spread throughout the world with subscriber support equipment located in various physical hosting facilities.

As data centers become larger, energy usage by the data centers increases. Some large data centers require a significant amount of power (e.g., around 100 megawatts), which is enough to power many homes (e.g., around 80,000). Data centers may also run application workloads that are compute and data intensive, such as crypto mining and machine learning applications, and consume a significant amount of energy. Customers of data centers and data center providers themselves are pushing for more energy efficient data centers and/or applications. To be more energy efficient, conventional data centers may source some of its energy from renewable energy sources. However, the configuration of data centers and/or the applications that run on the data centers are constantly changing and these conventional data centers are unable to dynamically increase its energy efficiency.

## SUMMARY

In general, techniques are described for invoking one or more actions to improve and/or control the energy usage of a data center. For example, the data center may include a plurality of network devices that may each include a plurality of visual indicators. These visual indicators may each indicate information corresponding to a configuration and/or state of the network device and/or network links of the network device, such as a status of one or more network links (e.g., active/inactive, connectivity issues, etc.). Visual indicators may comprise light-emitting diodes (LEDs) and/or other kinds of lights that draw power when activated. A visual indicator may draw power when activated (e.g., when an LED visual indicator emits light) and not draw power when deactivated (e.g., when a LED visual indicator does not emit light). Because a single data center may include tens, hundreds, or even thousands of network devices, each with visual indicators drawing power when activated, the visual indicators of the data center may collectively draw a significant amount of power. In accordance with the techniques described in this disclosure, a controller of a network system is configured to control a plurality of visual indicators of devices within a data center, or a set of data centers, such as by deactivating a visual indicator for an inactive network link, stable network links, and/or if a network administrator is not in physical proximity to network devices of the data center, to reduce the amount of power consumed by network devices of the data center.

As one example, the controller may be a standalone device or component of the network system. In some examples, the controller may be one or more software components executed by each network device within the network system. The controller may receive information corresponding to a configuration and/or state of one or more network devices. For example, the information may include routing and forwarding information, alert or event statistics (including hot-plug events), or other information indicative of the configuration and/or state of a network device and/or network links associated with the network device. Based on the information, the controller may determine whether to activate and/or deactivate a visual indicator. For instance, the controller may determine, based on routing and forwarding information of network devices, whether there are any inactive network links and may deactivate visual indicators that are associated with the inactive network links. In some examples, the controller may apply machine learning models to alarms or events information to identify links that are stable and deactivate visual indicators associated with stable network links and keep active visual indicators associated with unstable network links. In some examples, the controller may deactivate visual indicators based on a determination that an administrator is not in physical proximity to a network device. In some examples, the controller may only activate visual indicators of related network links that experience a network event (and deactivate all other visual indicators), such as activating visual indicators of network links included in virtual local area networks (VLANs) when any of the network links included in the VLAN experience a network event (e.g., hot plug events, failure of a network link etc.). The controller may use the identification of the network events to determine the configuration of the visual indicators and conserve power by deactivating unnecessary visual indicators.

The techniques of this disclosure may provide one or more improvements to the computer-related field of computer networking that are integrated within a practical application. For example, by deactivating visual indicators for various instances, such as deactivating a visual indicator for an inactive network link, stable network links, and/or if a network administrator is not in physical proximity to network devices of the data center, the controller may reduce the amount of power consumed by network devices of the data center.

In one example, a computing system includes memory and one or more programmable processors in communication with the memory, the one or more programmable processors configured to obtain network information from a network device within a datacenter, wherein the network device includes at least one visual indicator; determine a network event based on the network information; and instruct, based on the network event, the network device to configure the at least one visual indicator as active or inactive.

In another example, a method includes obtaining, by a computing system, network information from a network device within a datacenter, wherein the network device includes at least one visual indicator; determining, by the computing system, a network event based on the network information; and instructing, by the computing system and based on the network event, the network device to configure the visual indicator as active or inactive.

In yet another example, computer-readable media includes (e.g. stores and/or conveys) instructions configured to cause processing circuitry to obtain network information from a network device within a datacenter, wherein the network device includes at least one visual indicator; determine a network event based on the network information; and instruct, based on the network event, the network device to configure the at least one visual indicator as active or inactive.

The details of one or more examples of this disclosure are set forth in the accompanying drawings and the description below. Other features, objects, and advantages will be apparent from the description and drawings, and from the claims.

## BRIEF DESCRIPTION OF DRAWINGS

FIG. 1 is a block diagram illustrating an example network system having computing infrastructure, in accordance with one or more techniques of this disclosure.

FIG. 2 is a block diagram illustrating an example of a network device, in accordance with one or more techniques of this disclosure.

FIG. 3 is a block diagram illustrating an example of a controller, in accordance with one or more techniques of this disclosure.

FIG. 4 is a block diagram illustrating an example indicator management module, in accordance with one or more aspects of this disclosure

FIG. 5 is a block diagram illustrating a network system including an active route and an inactive network link, in accordance with one or more techniques of this disclosure.

FIG. 6 is a flow diagram illustrating an example operation for determining inactive network links based on network events, in accordance with one or more techniques in this disclosure.

FIG. 7 is a flow diagram illustrating an example operation for determining configurations of visual indicators based on stability of network links, in accordance with one or more techniques of this disclosure.

FIG. 8 is a block diagram illustrating an example system for determining configurations of visual indicators based on network events, in accordance with one or more techniques of this disclosure.

FIG. 9 is a flowchart illustrating an example operation for determining active links, in accordance with one or more techniques of this disclosure.

## DETAILED DESCRIPTION

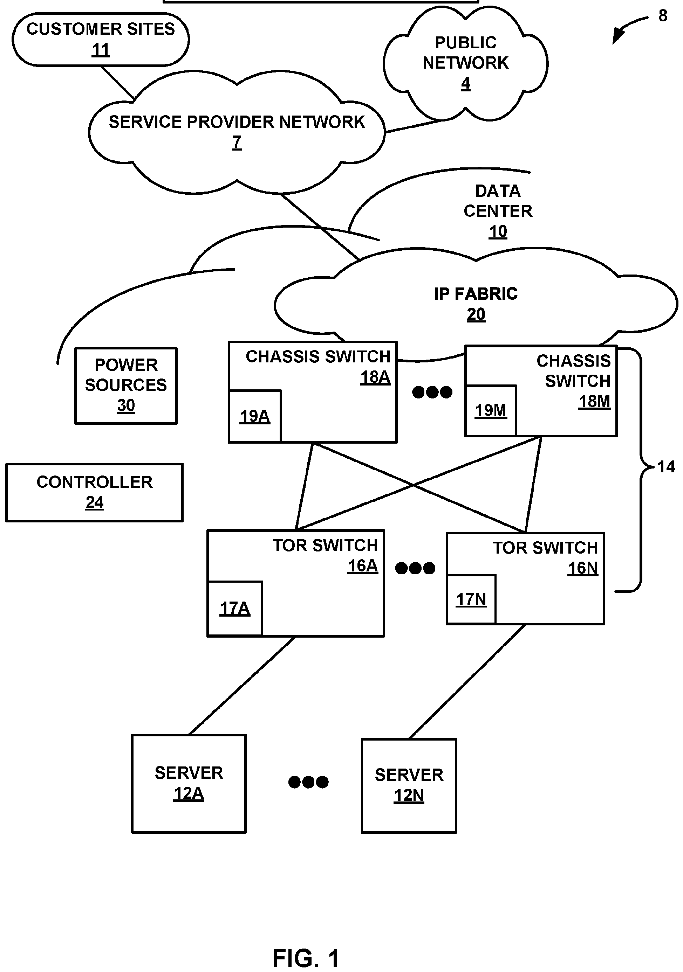

FIG. 1 is a block diagram illustrating an example network system 8 having computing infrastructure, in accordance with one or more techniques of this disclosure. In general, data center 10 provides an operating environment for applications and services for one or more customer sites 11 having one or more customer networks coupled to the data center by service provider network 7. Data center 10 may, for example, host infrastructure equipment, such as networking and storage systems, redundant power supplies, and environmental controls. Service provider network 7 is coupled to public network 4, which may represent one or more networks administered by other providers, and may thus form part of a large-scale public network infrastructure, e.g., the Internet. Public network 4 may represent, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 7, an enterprise IP network, or some combination thereof.

Although customer sites 11 and public network 4 are illustrated and described primarily as edge networks of service provider network 7, in some examples, one or more of customer sites 11 and public network 4 may be tenant networks within data center 10 or another data center. For example, data center 10 may host multiple tenants (customers) each associated with one or more virtual private networks (VPNs), each of which may implement one of customer sites 11.

Service provider network 7 offers packet-based connectivity to attached customer sites 11, data center 10, and public network 4. Service provider network 7 may represent a network that is owned and operated by a service provider to interconnect a plurality of networks. Service provider network 7 may implement Multi-Protocol Label Switching (MPLS) forwarding and in such instances may be referred to as an MPLS network or MPLS backbone. In some instances, service provider network 7 represents a plurality of interconnected autonomous systems, such as the Internet, that offers services from one or more service providers.

In some examples, data center 10 may represent one of many geographically distributed network data centers. As illustrated in the example of FIG. 1, data center 10 may be a facility that provides network services for customers. A customer of the service provider may be a collective entity such as enterprises and governments or individuals. For example, a network data center may host web services for several enterprises and end users. Other example services may include data storage, virtual private networks, traffic engineering, file service, data mining, scientific- or super- computing, and so on. Although illustrated as a separate edge network of service provider network 7, elements of data center 10 such as one or more physical network functions (PNFs) or virtualized network functions (VNFs) may be included within the service provider network 7 core.

In this example, data center 10 includes storage and/or compute servers interconnected via switch fabric 14 provided by one or more tiers of physical network switches and routers, with servers 12A-12N (herein, "servers 12") depicted as coupled to top-of-rack (TOR) switches 16A-16N. Servers 12 may also be referred to herein as "hosts" or "host devices." Data center 10 may include many additional servers coupled to other TOR switches 16 of the data center 10.

Switch fabric 14 in the illustrated example includes interconnected top-of-rack (or other "leaf') switches 16A-16N (collectively, "TOR switches 16") coupled to a distribution layer of chassis (or "spine" or "core") switches 18A-18M (collectively, "chassis switches 18"). Although not shown, data center 10 may also include, for example, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices.

In this example, TOR switches 16 and chassis switches 18 provide servers 12 with redundant (multi-homed) connectivity to IP fabric 20 and service provider network 7. Chassis switches 18 aggregate traffic flows and provides connectivity between TOR switches 16. TOR switches 16 may be network devices that provide layer 2 (MAC) and/or layer 3 (e.g., IP) routing and/or switching functionality. TOR switches 16 and chassis switches 18 may each include one or more processors and a memory and can execute one or more software processes. Chassis switches 18 are coupled to IP fabric 20, which may perform layer 3 routing to route network traffic between data center 10 and customer sites 11 by service provider network 7. The switching architecture of data center 10 is merely an example. Other switching architectures may have more or fewer switching layers, for instance.

Each of servers 12 may be a compute node, an application server, a storage server, or other type of server. For example, each of servers 12 may represent a computing device, such as an x86 processor-based server, configured to operate according to techniques described herein. Servers 12 may provide Network Function Virtualization Infrastructure (NFVI) for an NFV architecture.

Servers 12 host endpoints for one or more virtual networks that operate over the physical network represented here by IP fabric 20 and switch fabric 14. Although described primarily with respect to a data center-based switching network, other physical networks, such as service provider network 7, may underlay the one or more virtual networks.

In the example of FIG. 1, data center 10 may obtain energy from one or more power sources 30 for data center 10. Power sources 30 may include renewable energy sources, non-renewable energy sources, or a combination of renewable and non-renewable energy sources. For example, power sources 30 may include a connection to an electrical grid that provides power to devices within data center 10, such as servers 12 and TOR switches 16.

One or more devices of data center 10 may include visual indicators to visually indicate information, such as a status, of the device and/or one or more network links associated with the device. In the example of FIG. 1, TOR switches 16 include TOR visual indicators 17A-17N (hereinafter "TOR visual indicators 17"), respectively, and chassis switches 18 include chassis visual indicators 19A-19M (hereinafter "chassis visual indicators 19"), respectively. TOR visual indicators 17 and chassis visual indicators 19 (hereinafter "visual indicators 17, 19") may include one or more types of visual indicators such as LED lights, incandescent lights, and/or other types of visual indicators. For instance, visual indicators 17 may be LED lights that indicate connection status of physical ports of TOR switches 16 to chassis switches 18 and/or to servers 12. In some examples, other devices of data center 10 may include corresponding visual indictors not illustrated in FIG. 1.

Visual indicators 17, 19 may consume power. While each individual visual indicator may consume an insignificant amount of power, the total power consumption of all visual indicators of devices in data center 10 may consume a significant amount of power. For example, a single LED may consume 3.3 Volts (V) $\times$ 10 milliamperes (mA) = 33 milliwatts (mW) of power. An example server rack (e.g., a server of servers 12) may include 40 sub-racks each including 100 LEDs. This means that a sub-rack may draw 100 $\times$ 33mW = 3.3 Watts (W) of power, and a rack may draw 40 $\times$ 3.3W = 132W when every LED visual indicator is activated. When only 10% of the LEDs are activated, the rack may draw 13.2W of power. In a data center housing 800 racks, this means that LED visual indicators may draw 10,500W of power when only 10% of the LEDs are activated.

Customers and/or providers of data center 10 may find it beneficial to control the activation or deactivation of visual indicators to improve the energy usage of data center 10. In some examples, visual indicators for network links of network devices, such as TOR switches 16, chassis switches 18 (hereinafter "network devices 16, 18") may be in an active state even when those network links are not part of any active routes. Some network links might not be part of an active route and may represent inactive network links. In these examples, it may be beneficial to deactivate visual indicators corresponding to the inactive network links such that the visual indicators refrain from drawing power.

In some examples, visual indicators 17, 19 of networks devices 16, 18 may be in an active state even when the network links are relatively stable in a healthy state. Visual indicators may visually indicate one or more states of the network links associated with the physical port via color-coding (e.g., green for healthy, orange for unhealthy, red for failure, etc.). Visual indicators 17, 19 may remain illuminated even when ports of network devices 16, 18 are consistently in a healthy state. For example, visual indicators 17, 19 may remain consistently illuminated even when the state of the associated port remains in a healthy state over a period of time. In these examples, it may be beneficial to deactivate visual indicators corresponding to the stable links such that the visual indicators refrain from drawing power.

In some examples, visual indicators 17, 19 may remain illuminated and consume power even when there are no administrators in proximity to view visual indicators. In these examples, it may be beneficial to deactivate visual indicators such that the visual indicators refrain from drawing power when no administrators are in proximity to view them.

In accordance with the techniques described in this disclosure, controller 24 may control the activation or deactivation of visual indicators 17, 19 to improve the energy usage of data center 10. In this example, controller 24 may receive network information from one or more of network devices 16, 18 and provide instructions to configure visual indicators 17, 19 as active or inactive based on the network information. For example, controller 24 may determine network events based on the network information, and instruct a network device to configure visual indicators 17, 19 as active or inactive based on the network events.

In some examples, controller 24 may obtain network information including, for example, routing and forwarding information or configuration information of a network device (e.g., chassis switch 18M and determine, based on the routing and forwarding information or configuration information of chassis switch 18M, whether chassis switch 18M has an inactive network link. For example, chassis switch 18M may be communicatively coupled to TOR switch 16A via a network link between chassis switch 18M and TOR switch 16A. In this example, controller 24 may detect whether the network link between chassis switch 18M and TOR switch 16A is inactive based on forwarding information of chassis switch 18M (e.g., by determining that an interface is not in the forwarding table but is included in an interface table). Additionally, or alternatively, controller 24 may detect an inactive network link based on configuration information of TOR switch 16A. In this example, controller 24 determines that a network link of chassis switch 18M is incompletely or incorrectly configured and therefore inactive. Based on detecting an inactive network link associated with chassis switch 18M, controller 24 generates instructions to configure visual indicator 19M of chassis switch 18M in an inactive state and provides the instructions to chassis switch 18M.

In some examples, controller 24 may determine whether or not the network link is stable based on network information including, for example, event or alarm information indicative of events or alarms detected by a network device. For example, controller 24 may apply one or more models to the network information of chassis switch 18M to determine a stability score for a network link of chassis switch 18M and determine whether the stability score satisfies a predetermined threshold. In some examples, controller 24 may determine the stability score using a machine learning (ML) model. In this example, controller 24 determines a stability score for the network link between chassis switch 18M and TOR switch 16A. Controller 24 may determine, based on the stability score satisfying the predetermined threshold (e.g., less than, greater than, or equal to the threshold), that the network link is stable and thus that there is no activity of the network link to monitor. Based on determining that the network link of chassis switch 18M is stable, controller 24 may generate instructions to configure visual indicator 19M of chassis switch 18M in an inactive state and provides the instructions to chassis switch 18M.

In some examples, controller 24 may determine whether a hot-plug event has occurred and therefore whether an administrator is in a proximity to network devices 14. Controller 24 may use network information regarding hot-plug events, such as the disconnection of cables (e.g., Ethernet cables, optical cables, etc.) from network devices 14, insertion of a USB drive into a USB port of network devices 14, insertion of an SD-card into network devices 14, connection of input/output components to network devices 14 (e.g., connecting a keyboard and monitor), removal or installation of network cards, and/or other types of events performed by an administrator on a network device of network devices 14 when within proximity of the network device. Controller 24 may determine, based on a lack of hot-plug events detected by a network device, such as chassis switch 18M, for a given duration of time that an administrator is likely not within a proximity of chassis switch 18M. In an example, chassis switch 18M provides network information to controller 24, such as an indication that no hot-plug events are received over a given duration of time. Controller 24 determines, based on the indication that no hot-plug events are received over the given period of time (or based on determining that no hot-plug events are received over the given period of time) that an administrator is likely not within a proximity of chassis switch 18M. Based on the determination, controller 24 generates instructions to configure visual indicator 19M as inactive. Controller 24 may apply one or more time-bound techniques to configure visual indicators 17, 19 as inactive for predetermined periods of time and avoid false positives that result in the configuration of visual indicators as inactive. In an example, controller 24 generates instructions to configure visual indicator 19M as inactive for a predetermined period of time that is based on an exponential function.

In some examples, controller 24 may determine, based on network information of chassis switch 18M, related links (e.g., links of a virtual local area network (VLAN)) affected by a network event. For example, in response to determining a network event, such as a failure to the link between chassis switch 18M and TOR switch 16A, controller may determine a VLAN associated with the link between chassis switch 18M and TOR switch 16A and one or more network links associated with the VLAN, such as the link between chassis switch 18M and TOR switch 16N. Based on determining that the VLAN affected by the network event includes the link between chassis switch 18M and TOR switch 16A and the link between chassis switch 18M and TOR switch 16N, controller 24 may generate instructions to configure a visual indicator associated with the link between chassis switch 18M and TOR switch 16A and a visual indicator associated with the link between chassis switch 18M and TOR switch 16N in an active state and to configure visual indicators not associated with the VLAN in an inactive state, and provide the instructions to chassis switch 18M. In this way, controller 24 may activate only visual indicators that are relevant to a network administrator servicing network equipment (e.g., such as activating only visual indicators of links affected by the network event) and deactivate other visual indicators to avoid unnecessarily powering on other visual indicators.

The techniques of this disclosure may provide one or more practical advantages. The use of network events to determine whether to enable or disable visual indicators 17, 19 may significantly reduce the power consumption of data center 10 by reducing the number of visual indicators 17, 19 that are required to be powered on. In addition, the use of network events may ensure that the visual indicators of visual indicators 17, 19 that are powered on are those that are useful and relevant for identifying and diagnosing network issues. For example, the use of identified hot plug events as a basis for configuring visual indicators 17, 19 may enable controller to only power on visual indicators of visual indicators 17, 19 that are relevant to a network administrator servicing network equipment and avoid unnecessarily powering on other visual indicators.

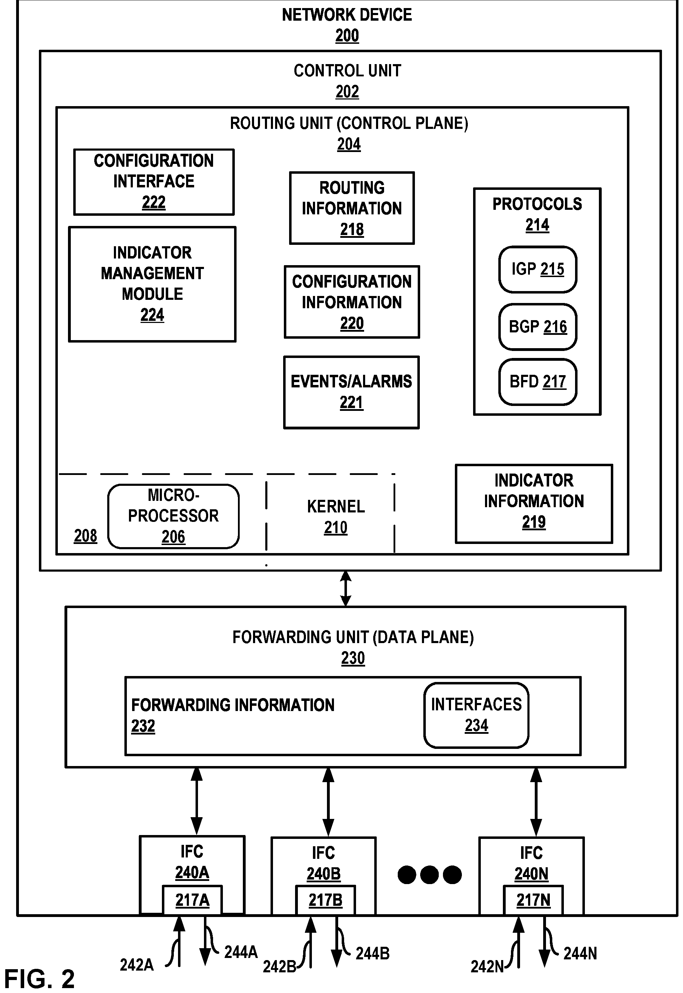

FIG. 2 is a block diagram illustrating an example of a network device 200 according to the techniques described herein. Network device 200 may represent an example implementation of network devices 14 as illustrated in FIG. 1, but may be any network device of a network system.

As shown in FIG. 2, network device 200 includes a control unit 202 having a routing unit 204 (control plane), and is coupled to forwarding unit 230 (data plane). Forwarding unit 230 is associated with one or more interface cards 240A-240N ("IFCs 240") that receive packets via inbound links 242A-242N ("inbound links 242") and send packets via outbound links 244A-244N ("outbound links 244"). Inbound links 242 and outbound links 244 may be referred to as "links 242, 244" and/or "network links 242, 244" throughout. IFCs 240 are typically coupled to links 242, 244 via a number of interface ports (not shown). Inbound links 242 and outbound links 244 may represent physical interfaces, logical interfaces, or some combination thereof.

IFCs 240 may each include one or more visual indicators, such as visual indicators 217A-217N (hereinafter "visual indicators 217"). Visual indicators 217 may represent an example implementation of visual indicators 17, 19 as illustrated in FIG. 1 and provide similar functionality. For example, visual indicators 217 may be LED lights that provide a visual indication of the status of networks links associated with physical ports and interfaces of IFCs 240.

Elements of control unit 202 and forwarding unit 230 may be implemented solely in software, or hardware, or may be implemented as combinations of software, hardware, or firmware. For example, control unit 202 may include one or more processors 206 that may represent, one or more microprocessors, digital signal processors ("DSPs"), application specific integrated circuits ("ASICs"), field programmable gate arrays ("FPGAs"), or any other equivalent integrated or discrete logic circuitry, or any combination thereof, which execute software instructions. In that case, the various software modules of control unit 202 may comprise executable instructions stored, embodied, or encoded in a computer-readable medium, such as a computer-readable storage medium, containing instructions. Instructions embedded or encoded in a computer-readable medium may cause a programmable processor, or other processor, to perform the method, e.g., when the instructions are executed. Computer-readable storage media may include random access memory ("RAM"), read only memory ("ROM"), programmable read only memory (PROM), erasable programmable read only memory ("EPROM"), electronically erasable programmable read only memory ("EEPROM"), non-volatile random access memory ("NVRAM"), flash memory, a hard disk, a CD-ROM, a solid state drive, magnetic media, optical media, or other computer-readable media. Computer-readable media may be encoded with instructions corresponding to various aspects of network device 200, e.g., protocols, processes, and modules. Control unit 202, in some examples, retrieves and executes the instructions from memory for these aspects.

Routing unit 204 operates as a control plane for network device 200 and includes an operating system that provides a multi-tasking operating environment for execution of a number of concurrent processes. Routing unit 204 includes a kernel 210, which provides a run-time operating environment for user-level processes. Kernel 210 may represent, for example, a UNIX operating system derivative such as Linux or Berkeley Software Distribution ("BSD"). Kernel 210 offers libraries and drivers by which user-level processes may interact with the underlying system. Hardware environment 208 of routing unit 204 includes processor 206 that executes program instructions loaded into a main memory (not shown in FIG. 2) from a storage device (also not shown in FIG. 2) in order to execute the software stack, including both kernel 210 and processes executing on the operating environment provided by kernel 210.

Kernel 210 provides an operating environment that executes various protocols 214 at different layers of a network stack, including protocols for implementing EVPN networks. For example, routing unit 204 includes network protocols that operate at a network layer of the network stack. Protocols 214 provide control plane functions for storing network topology in the form of routing tables or other structures, executing routing protocols to communicate with peer routing devices and maintain and update the routing tables, and provide management interface(s) to allow user access and configuration of network device 200. That is, routing unit 204 is responsible for the maintenance of routing information 218 to reflect the current topology of a network and other network entities to which network device 200 is connected. In particular, routing protocols 214 periodically update routing information 218 to reflect the current topology of the network and other entities based on routing protocol messages received by network device 200.

In the example of FIG. 2, routing protocols 214 include interior gateway protocol (IGP) 215 (e.g., Intermediate System to Intermediate System (IS-IS) or Open Shortest Path First (OSPF)), Border Gateway Protocol ("BGP") 216, and/or other routing protocols for exchanging routing information with other routing devices and for updating routing information 218. In EVPN, network device 200 may use BGP to advertise to other network devices the MAC addresses learned from local customer edge network devices to which Network device 200 is connected. In particular, network device 200 may use a BGP route advertisement message to announce reachability information for the EVPN, where the BGP route advertisement specifies one or more MAC addresses learned by network device 200 instead of L3 routing information. Network device 200 updates routing information 218 based on the BGP route advertisement message. Routing unit 204 may include other protocols not shown in FIG. 2, such as an MPLS label distribution protocol and/or other MPLS protocols. Routing protocols 214 include Bidirectional Forwarding Detection ("BFD") protocol 217 for exchanging BFD messages to detect node and/or link failure. In some examples, BFD protocol 217 may include seamless-BFD (S-BFD) or multihop-BFD (MH-BFD).

Routing information 218 may include information defining a topology of a network, including one or more routing tables and/or link-state databases. Typically, the routing information defines routes (i.e., series of next hops) through a network to destinations / prefixes within the network learned via a distance-vector routing protocol (e.g., BGP) or defines the network topology with interconnected links (e.g., interfaces) learned using a link state routing protocol (e.g., IS-IS or OSPF). In contrast, forwarding information 232 is generated based on selection of certain routes within the network and maps packet key information (e.g., L2 / L3 source and destination addresses and other select information from a packet header) to one or more specific next hops forwarding structures within forwarding information 232 and ultimately to one or more specific output interface ports of IFCs 240. Routing unit 204 may generate forwarding information 232 in the form of a radix tree having leaf nodes that represent destinations within the network, a series of tables, a link list, a database, a flat file, or various other data structures.

Routing unit 204 includes a configuration interface 222 that receives and may report configuration data for network device 200. Configuration interface 222 may represent a command line interface; a graphical user interface; Simple Network Management Protocol ("SNMP"), Netconf, or another configuration protocol; or some combination of the above in some examples. Configuration interface 222 receives configuration data configuring network device 200, and other constructs that at least partially define the operations for network device 200, including the techniques described herein. For example, an administrator may, after powering-up, activating or otherwise enabling network device 200 to operate within a network, interact with control unit 202 via configuration interface 222 to configure, e.g., interfaces of network device 200.

Forwarding unit 230 represents hardware and logic functions that provide high-speed forwarding of network traffic. Forwarding unit 230 typically includes a set of one or more forwarding chips programmed with forwarding information that maps network destinations with specific next hops and the corresponding output interface ports. In general, when network device 200 receives a packet via one of inbound links 242, forwarding unit 230 identifies an associated next hop for the data packet by traversing the programmed forwarding information based on information within the packet, e.g., in the case of BUM packet forwarding, the transport label and/or inclusive multicast label. Forwarding unit 230 forwards the packet on one of outbound links 244 mapped to the corresponding next hop.

In the example of FIG. 2, forwarding unit 230 may store forwarding information 232. In accordance with routing information 232, forwarding unit 230 stores forwarding information 232 that maps packet field values to network destinations with specific next hops and corresponding outbound interface ports. For example, routing unit 204 analyzes routing information 218 and generates forwarding information 232 in accordance with routing information 218. Forwarding information 232 may be maintained in the form of one or more tables, link lists, radix trees, databases, flat files, or any other data structures.

In the example of FIG. 2, network device 200 stores configuration information 220. Configuration information 200 may store configuration information of network device 200 that includes interface configuration. For example, configuration information 200 may store information regarding the configuration of ports or other interfaces of IFCs 240. Configuration information 200 may store the configuration in the form of one or more tables, link lists, radix trees, databases, flat files, or any other data structures. In an example, network device 200 stores configuration information regarding a port of IFC 240B in a table that includes an identifier of an interface (e.g., an identifier of the port), a state of the interface, and network activity of the port, such as bandwidth of traffic passing through the interface among other information in configuration information 220.

Network device 200 may include events/alarm 221. Events/alarms 221 may be a data structure or repository that may store information regarding network events and/or alarms associated with network links of network device 200. For example, event/alarms 221 may store information regarding network events and network alarms associated with network links 242, 244. Events/alarms 221 may store information regarding network events, such as hot-plug events and network alarms, such as alarms regarding a state of a network link and/or an interface to the network link.

Routing unit 204 includes indicator management module 224. Indicator management module 224 may be a plugin, module, process, engine, executable, or other type of software component of routing unit 204. Indicator management module 224 may manage the configuration of visual indicators 217 and cause visual indicators 217 to illuminate, power off, and/or change the configuration of visual indicators 217 based on a network event determined by a controller (e.g., controller 24 of FIG. 1) and/or by network device 200. As described below, the controller may obtain forwarding information 232, configuration information 220, events/alarms 221, and/or other network information of network device 200 to determine a network event, such as whether a network link of network device 200 is inactive, whether a network link of network device 200 is stable

For example, indicator management module 224 may configure indicator 217A to be inactive (e.g., not illuminate) based on a determination that inbound link 242A or outbound link 244A is inactive. In some examples, indicator management module 224 may configure indicator 217B to be inactive based on a determination that inbound link 242B or outbound link 244B is stable. In some examples, indicator management module 224 may only configure indicator 217N to be active (while deactivating other visual indicators) based on determining that inbound link 242N or outbound link 244N is associated with a VLAN affected by a network event (e.g., detecting a link failure to one of the links of the VLAN). Indicator control module 224 may maintain information regarding the configuration of visual indicators 217 in indicator information 219. Indicator control module 224 may cause visual indicators 217 to operate based on the configuration information stored in indicator information 219.

Indicator information 219 may be a data structure or other form of data storage that may store one or more tables that store information regarding the configuration of visual indicators 217. For example, indicator information 219 may include a table with an identifier of each indicator of visual indicators 217, a corresponding entry regarding the configuration of an indicator (e.g., whether the indicator should be illuminated or deactivated), and/or a corresponding entry regarding the network event associated with the configuration of the indicator (e.g., an identifier of a network link, state of the network link, etc.). Indicator control module 224 may update indicators information 219 based on analysis of network links 242, 244 of network device 200 analyzed by a controller (e.g., controller 24 of FIG. 1) and/or network device 200.

In some examples, indicator management module 224 may receive instructions from controller, such as controller 24 as illustrated in FIG. 1, to configure one or more of visual indicators 217. In these examples, network device 200 exports network information, (e.g., forwarding information 232, configuration information 220, and/or events/alarms 221) to controller 24, which in turn may determine a network event associated with network device 200. Subsequent to sending network information to controller 24, network device 200 may receive instructions from controller 24 to configure one or more visual indicators 217 based on the determination of a network event associated with network device 200. In some examples, controller 24 may determine that inbound link 242A is inactive (e.g., inbound link 242A is not part of an active network route and/or incorrectly/incompletely configured), determine that inbound link 242A is stable (e.g., determining that a stability score of inbound link 242A satisfies a predetermined threshold), and/or determining than an administrator is not in proximity to the network device. In these examples, network device 200 may receive instructions from controller 24 to configure visual indicator 217A as inactive. In some examples, controller 24 may determine inbound link 242A is associated with a VLAN in which one of the other network links of the VLAN has failed). In these examples, network device 200 receives instructions from controller 24 to configure visual indicator 217A as active while deactivating other visual indicators not associated with the VLAN. Indicator management module 224 updates indicator information 219 based on the instructions received from controller 24 and configures visual indicator 217A in an inactive state.

In some examples, indicator management module 224 may determine a network event associated with network device 200 and configure visual indicators 217 in response to determining a network event in addition to or in lieu of receiving instructions from controller 24. In these examples, indicator management module 224 may configure visual indicators 217 based on determining a network event. For example, indicator management module 224 may determine the network events based on network information, such as configuration information 220 (e.g., information regarding the configuration of interfaces of network device 200), forwarding information 232, and/or events/alarms 221. For example, indicator management module 224 may obtain configuration information 220 for information regarding the configuration of interfaces to links 242, 244. Indicator management module 224 may obtain forwarding information 232 for information regarding whether links of network device 200 are part of active routes. Indicator management module 224 may obtain events/alarms 221 for information regarding events or alarms associated with links 242, 244, or more generally with network device 200, or other information regarding user interactions with network device 200. Indicator management module 224 may additionally or alternatively use information regarding VLANs associated with one or more network links of links 242, 244 (e.g., whether a given network link is associated with a VLAN that has experienced a network event). Indicator management module 224 may determine a configuration of visual indicators 217 based on determining a network event and configure the visual indicators 217 in an active or inactive state.

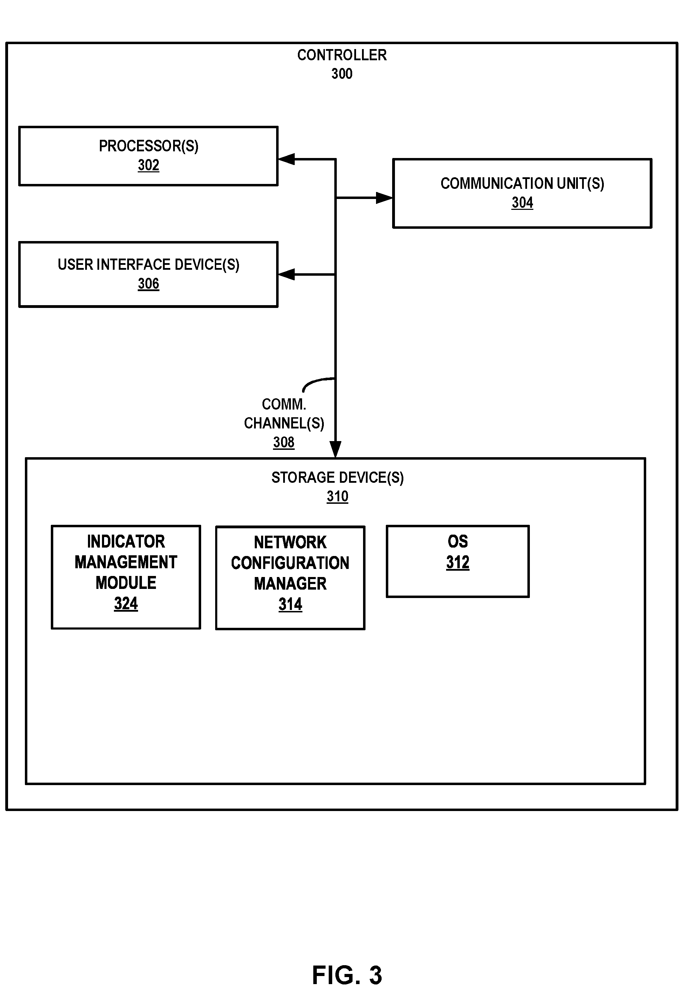

FIG. 3 is a block diagram illustrating an example of a controller 300 according to the techniques described herein. Controller 300 may represent an example implementation of controller 24 as illustrated in FIG. 1.

Controller 300 includes one or more of processors 302. Processors 302 may include one or more processors and/or types of processing circuitry, such as multiple processing cores, chiplets, ASICs, FPGAs, or other integrated circuits and programmable hardware. In an example, processors 302 may include a System-on-Chip (SoC) having, e.g., one more cores, a network interface for high-speed packet processing, one or more acceleration engines for specialized functions (e.g., security/cryptography, machine learning, storage), programmable logic, integrated circuits, and so forth.

Controller 300 includes one or more of communication units 304. Communication units 304 may include one or more types of communication units, such as network interface cards (NICs), antennas, transceivers, and/or other types of communication units. Communication units 304 may transmit and receive information from one or more devices, such as network devices 14 as illustrated in FIG. 1 and/or network device 200 of FIG. 2. For example, communication units 304 may obtain network information from network devices 14.

Controller 300 includes one or more of user interface devices (hereinafter "UIC") 306. UIC 306 may include one or more input and/or output devices of controller 300. UIC 306 may include input devices, such as touchscreens, keyboards, mice, microphones, and/or other types of input devices. UIC 306 may include output devices, such as displays, speakers, haptic engines, visual indicators, and/or other types of output devices. In some examples, UIC 306 includes terminal via which a user may access a command line interface of controller 24.

Controller 300 includes one or more of communication channels 308 (illustrated as "COMM. CHANNEL(S) 308" in FIG. 3, hereinafter "comm channels 308"). Comm channels 308 may include one or more types of communication channels, such as hardware interconnects, software interconnects, and/or other types of communication channels that interconnect one or more components of controller 300. For example, communications channels may interconnect processors 302 and storage devices 310 for processors 302 to execute the instructions of one or more software components of controller 300.

Controller 300 includes one or more of storage devices 310. Storage devices 310 may include one or more types of storage devices, such as hard disk drives, solid state drives, NVM Express (NVMe) drives, tape drives, volatile storage devices (e.g., RAM), flash drives, virtualized storage, cloud storage, and/or other types of storage devices. Storage devices 310 may store the instructions of one or more software components executed by processors 302. For example, storage devices 310 may store the instructions of an operating system of controller 300.

Storage devices include operating system 312 (illustrated as "OS 312", in FIG. 3, hereinafter referred to as such). OS 312 may be an operating system of controller 300 that provides an execution environment for one or more other software components of controller 300. For example, OS 312 may facilitate the execution of network configuration manager 314 by controller 300.

Storage devices 310 include network configuration manager 314. Network configuration manager 314 may be a software component of controller 300, such as a plugin, module, executable, standalone process, and/or another type of software component. Network configuration manager 314 may manage the configuration of one or more network devices within a network topology. For example, network configuration manager 314 may manage the configuration of network devices 14 within IP fabric 20 as illustrated in FIG. 1 based on network information obtained by indicator management module 318.

Storage devices 310 includes indicator management module 324. Indicator management module 324 may be a software component of controller 300, such as a plugin, module, executable, standalone process, and/or another type of software component. Indicator management module 324 may operate similar to indicator management module 224 as illustrated in FIG. 2. Indicator management module 324 may manage the configuration of visual indicators of one or more of network devices 14 based on network events. Indicator management module 324 may obtain information from network devices 14 and process the network information. For example, indicator management module 324 may use the network information to determine a network event associated with a network device and configure visual indicators of the network device based on the determined network events.

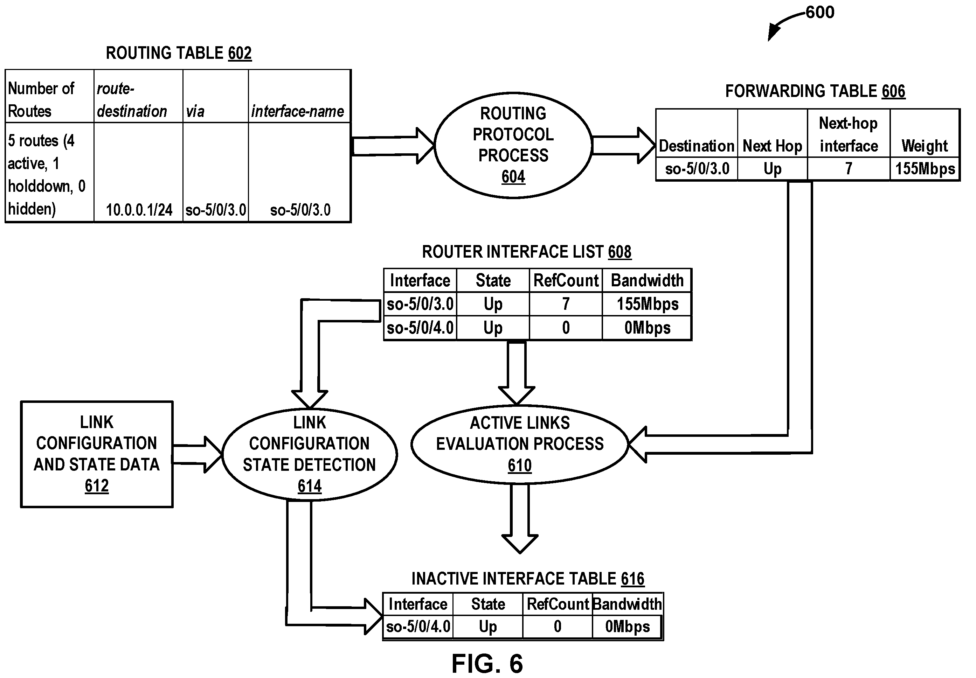

Indicator management module 324 may determine network events based on network information obtained by collection module 318. In some examples, indicator management module 324 may determine a network event as indicative of whether a network link is an inactive network link, as further described and illustrated in FIG. 6. In these examples, indicator management module 324 may use network information that includes information from a forwarding table or a forwarding information base of a network device to determine whether the network link is included in an active network route (e.g., whether the network link is part of an active network route or is not part of any active network route, and therefore inactive). In an example, indicator management module 324 receives forwarding information of a network device and determines, based on the forwarding information and a list of active interfaces of the network device, that a particular interface to a network link of the network device is not included in any active network routes. Based on determining that the particular interface to the network link is not included in any active network routes, indicator management module 324 determines that the particular network link is an inactive network link.

In some examples, indicator management module 324 may determine whether a network link is an inactive network link based on network information that includes information regarding the configuration of interfaces to network links of a network device to determine whether the network links are inactive network links. Indicator management module 324 may use the information regarding the configuration of interfaces to the network links in addition or in lieu of the forwarding information of the network device. Indicator management module 324 may determine whether an interface of a network device, such as chassis switch 18M, is incorrectly or incompletely configured. Indicator management module 324 may compare a the configuration information for interfaces of the network device (e.g., configuration information 220 of FIG. 2) with a list of active interfaces of the network device to determine whether one or more of the interfaces are improperly configured. In an example, indicator management module 324 receives network information from chassis switch 18M, where the network information may include the configuration information of interfaces of chassis switch 18M and information of a list of active interfaces of chassis switch 18M. Indicator management module 324 determines that a particular interface of chassis switch 18M is included in the active list of interfaces of chassis switch 18M but there is no network activity for the particular interface. Indicator management module 324 may determine, based on the configuration information of interfaces of chassis switch 18M, that the particular interface is incorrectly or incompletely configured, and thus determines that the network link coupled to the particular interface is an inactive network link.

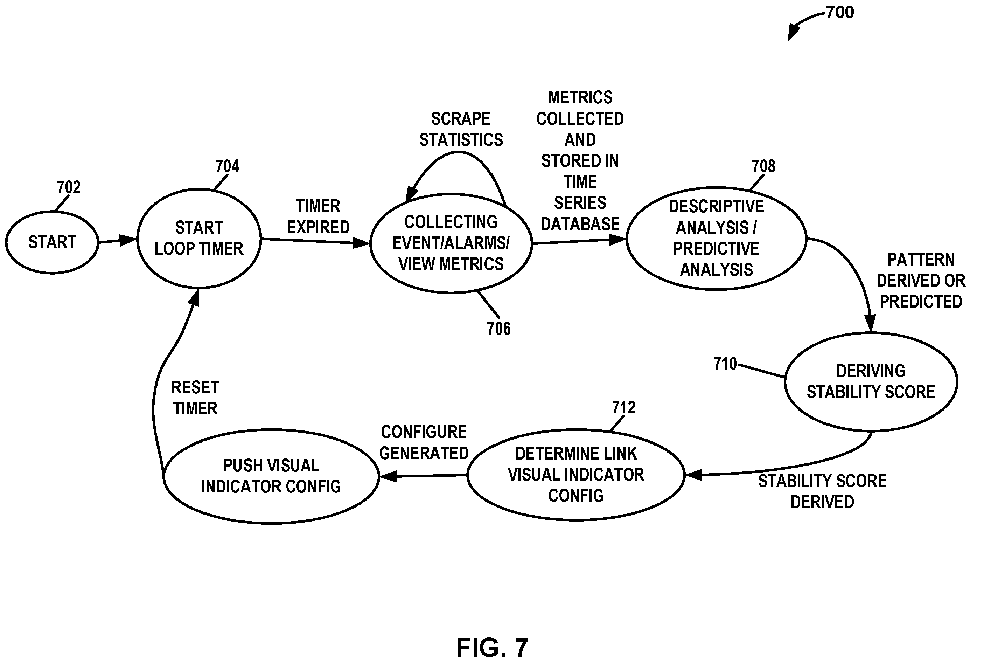

In some examples, indicator management module 324 may determine network events that are indicative as to whether a network link is a stable network link, as further described and illustrated in FIG. 7. For example, indicator management module 324 may determine that a network link is a stable network link based on stability scores generated using one or more ML models. Indicator management module 324 may use the one or more ML models to process network information to generate stability scores that are indicative of the stability of a network link. For example, indicator management module 324 may generate stability scores that are indicative of a likelihood that a network link will experience an issue (e.g., whether the network link will fail). Indicator management module 324 may provide the network information to the one or more ML models as input and receive the stability scores as output where the stability scores are numerical representations of a stability of each network link. For example, indicator management module 324 may compare the stability scores of the network links to a predetermined threshold to determine whether the network links are stable (e.g., where the stability score meets or exceeds the predetermined threshold) or instable (e.g., where the stability score fails to meet the predetermined threshold).

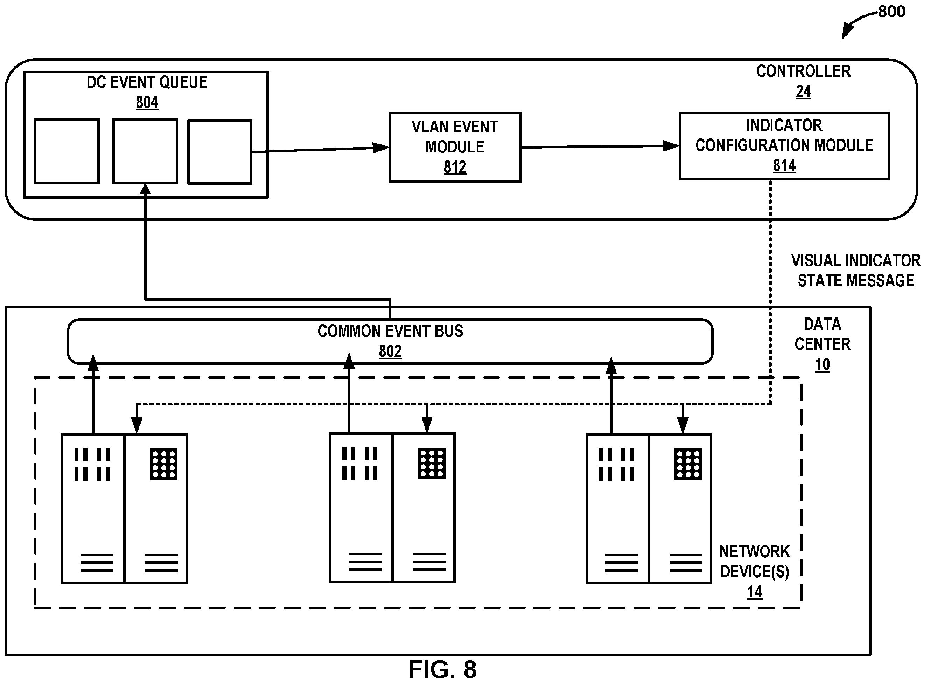

In some examples, indicator management module 324 may determine whether an administrator is within a proximity of a network device based on whether a hot-plug event has been detected, as further described and illustrated in FIG. 8. Indicator management module 324 may receive network information from network devices that includes indications of hot-plug events, such as the connection/disconnection of network cables, insertion of USB drives, SD-cards, or other storage, installation/removal of network cards, connection/disconnection of peripherals (e.g., displays, keyboards, mice, terminals, etc.) and/or other types of hot-plug events. Indicator management module 324 may use a lack of an occurrence of a hot-plug event over a given duration of time to determine that an administrator is not likely within a proximity of a network device. In an example, indicator management module 324 determines that chassis switch 18M has not provided an indication of an occurrence of a hot-plug event for at least a predetermined period of time. Indicator management module 324 determines that an administrator is unlikely to be within proximity of chassis switch 18M due to chassis switch 18M not providing an indication of an occurrence of a hot-plug event for at least the predetermined period of time. Based on determining that the administrator is unlikely to be within proximity of chassis switch 18M, indicator management module 324 may deactivate visual indicators of chassis switch 18M.

In some examples, indicator management module 324 may determine whether a network link is part of a VLAN associated with a network event. Indicator management module 324 may use network information to determine whether a network link is part of a VLAN that has experienced the network event. In an example, indicator management module 324 receives network information consistent with a first network link being part of a VLAN, where a second network link of the VLAN has experienced a hot plug network event (e.g., event indicating removal of network cable). Indicator management module 324 determines that the first network link is part of the VLAN that has experienced the network event. Indicator management module 324 instructs the network device to configure a visual indicator associated with the first network link as active. In some examples, indicator management module 324 may instruct network devices in a data center to configure all other visual indicators as inactive except for visual indicators associated with network links of VLANs that have experienced network events.

Indicator management module 324 may instruct network devices to configure visual indicators of the network devices. Indicator management module 324 may determine configurations of the visual indicators based on the determined network event and transmit instructions regarding the configurations of visual indicators to the relevant network devices via communication units 304.

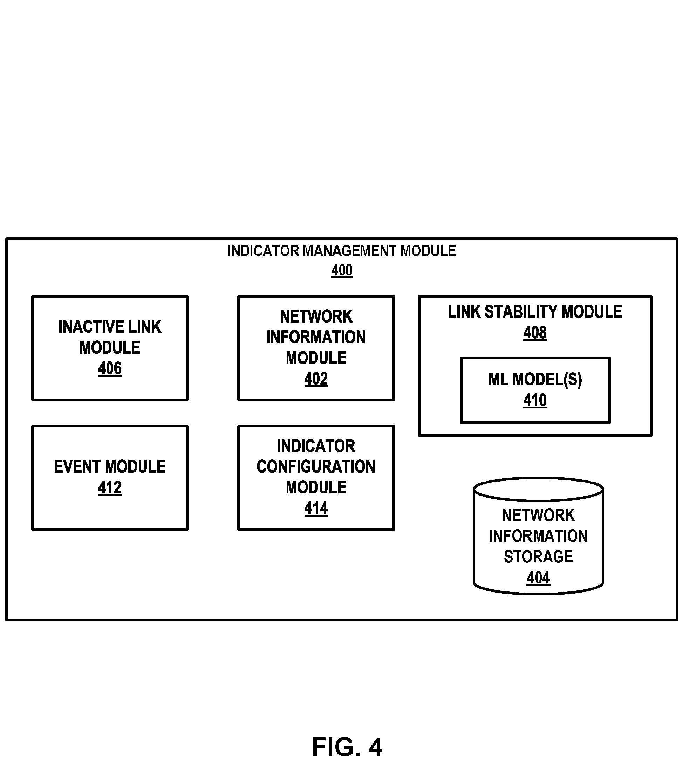

FIG. 4 is a block diagram illustrating an example indicator management module 400, in accordance with one or more aspects of this disclosure. Indicator management module 400 may represent an example implementation of indicator management module 224 as illustrated in FIG. 2 and/or indicator management module 324 as illustrated in FIG. 3. For example, indicator management module 400 may be executed by processing or processing circuitry of a network device or controller and determine network events.

Indicator management module 400 includes network information module 402. Network information module 402 may be a software component of indicator management module 400, such as a plugin, module, process, executable, and/or other type of software component. Network information module 402 may obtain network information for indicator management module 400. Network information module 402 may obtain network information from the network device executing indicator management module 400 (e.g., when indicator management module 400 is executed locally by a network device) or from network devices within a data center (e.g., when indicator management module 400 is executed by a controller). Network information module 402 may obtain the network information by polling network devices, polling one or more software components of the network devices, and by causing the network devices to periodically send network information. For example, network information module 402 may cause network devices within a data center to send network information after a given period of time (e.g., period of seconds, minutes, hours, or days).

Network information module 402 may store network information in network information storage 404. Network information storage 404 may be a data structure or other type of data storage that may store network information obtained by indicator management module 400. For example, network information storage 404 may be a data structure stored in the memory of a controller or a network device and that includes network information. Network information storage 404 may store one or more types of network information, such as configuration information of network links, forwarding information of network devices (e.g., information from forwarding tables), configuration information of network devices, network activity information (e.g., alerts, alarms, administrator interactions with network devices and/or network links of network devices, etc.).

Network information module 402 may store historical network information in network information storage 404. Network information module 402 may store network information as time series data in network information storage 404. For example, network information module 402 may store network information in thirty minute time intervals (or any other time interval) to provide a historical view of network information.

Indicator management module 400 includes inactive link module 406. Inactive link module 406 may be a software component of indicator management module 400, such as a plugin, module, process, executable, and/or other type of software component. Inactive link module 406 may determine network events that are indicative of a network link being inactive, as further described and illustrated in FIG. 6. Inactive link module 406 use network information in network information storage 404 to determine whether a network link is inactive. For example, inactive link module 406 may determine whether a given network link is inactive based on configuration information associated with the network link and/or forwarding information associated with the network link. As one example, inactive link module 406 may determine that a given network link is incorrectly configured based on configuration information and is therefore inactive. As another example, inactive link module 406 may determine that a given network link is not part of an active network route based on forwarding information associated with the network link and is therefore inactive. Inactive link module 406 may cause indicator configuration module 414 to instruct a network device to configure a visual indicator associated with a network link as inactive based on determining that the network link is inactive.

Indicator management module 400 includes link stability module 408. Link stability module 408 may be a software component of indicator management module 400, such as a plugin, module, process, executable, and/or other type of software component. Link stability module 408 may determine stability scores of network links that are representative of the stability of the network links (e.g., whether a given network link is stable and may not need to be active), as further described and illustrated in FIG. 7. Link stability module 408 may use one ML models, such as ML models 410, to determine the stability of the network link.

Link stability module 408 includes one or more of ML models 410. ML models 410 may include one or more types of ML models, such as deep-learning models, Q-learning models, linear regression algorithms, decision trees, random forest, gradient boosting, language models, and/or other types of ML models. ML models 410 may include ML models trained to determine stability scores of network links that are representative of the stability of the network links. For example, ML models 410 may include a deep learning model trained to process network information and determine stability scores, as further described and illustrated in FIG. 7.

Link stability module 408 may use ML models 410 to process network information of network information storage 404. Link stability module 408 may provide network information as input to an ML model of ML models 410 and receive stability scores as output from the ML model. The stability score may comprise a numerical value representative of the stability of the network link. Link stability module 408 may compare the stability score of a network link to a predetermined threshold to determine whether the network link is stable. Link stability module 408 may determine whether stability scores of network links satisfy the predetermined or whether the stability scores are below the predetermined threshold. For example, link stability module 408 may determine that stability score satisfies the predetermined threshold and is therefore a stable network link. Based on the determination of that a network link is stable, link stability module 408 causes indicator configuration module 414 to instruct the network device to configure a visual indicator associated with the particular network link determined to be stable as inactive.

Indicator management module 400 includes event module 412. Event module 412 may be a software component, such as a plugin, module, process, executable, and/or other type of software component. Event module 412 may use the occurrence of hot-plug events to determine that an administrator is within a proximity of a network device.

Event module 412 may receive indications that hot-plug events have occurred from network devices as part of the network information obtained by network information module 402 (e.g., such as information from events/alarms 221 of network device 200 of FIG. 2). Event module 412 may receive indications of hot-plug events that include the connection/disconnection of network cables, insertion of USB drives, SD-cards, or other storage, installation/removal of network cards, connection/disconnection of peripherals (e.g., displays, keyboards, mice, terminals, etc.) and/or other types of hot-plug events.

Event module 412 may determine whether an administrator is within a proximity of a network device based on the occurrence of a hot-plug event over a given duration of time. Event module 412 may determine whether the administrator is within the proximity due to the need for physical interaction with a network device in order for a hot-plug event to have occurred (e.g., that the hot-plug event could have only occurred due to a physical interaction with the network device). For example, event module 412 may receive an indication of a hot-plug event of an insertion of a USB drive into a network device and determine that an administrator is within a proximity of the network device based on the hot-plug event. Event module 412 may determine that an administrator is not within a proximity of a network device when hot-plug events are not detected over a given duration of time. For example, event module 412 may receive network information that includes an indication that a network event for a network device was not received over the given duration of time and determine that an administrator is not within a proximity of the network device In some examples, event module 412 may determine, from the absence of receiving events reported by the network device over a given duration of time and determine that an administrator is not within a proximity of the network device.

Event module 412 may determine whether one or more VLANs within a data center have experienced a network event. Event module 412 may use network information to determine whether one or more network links within a VLAN have experienced a network event, such as a hot plug event, a failure of a network link of the VLAN, a change in stability of a network link of the VLAN, and/or other types of network events. In an example, network information module 402 obtains network information and stores the network information in network information storage 404. Event module 412 processes the network information and determines that a network link included in a VLAN has experienced a network event.

Event module 412 may determine which network links are included in a VLAN that has experienced a network event. Event module 412 may use information regarding network links in network information storage 404 to determine which network links are included in a VLAN that has experienced a network event. In some examples, Event module 412 may use configuration of the network device executing indicator management module 400 to determine which network links are included in a VLAN.

Event module 412 may cause indicator configuration module 414 to configure visual indicators associated with network links included in a VLAN that has experienced a network event as active and other visual indicators as inactive. For example, VLAN event module 412 may cause indicator configuration module 414 to configure all other visual indicators of one or more network devices as inactive except for those included in VLANs that have experienced network events. Event module 412 may cause indicator configuration module 414 to configure all other visual indicators as inactive in order to only power on visual indicators that are relevant to diagnosing issues with VLANs. For instance, event module 412 may determine that all other indicators that are not included in a VLAN that has experienced a hot-plug event should be configured as inactive.

Indicator management module 400 includes indicator configuration module 414. Indicator configuration module 414 may be a software component of indicator management module 400, such as a plugin, module, process, executable, and/or other type of software component. Indicator configuration module 414 may instruct network devices or components of network devices to configure visual indicators are active or inactive. In an example, inactive link module 406 determines that three network links of a network device are active and that two network links are active. Inactive link module 406 provides an indication to indicator configuration module 414 regarding the inactive and active network links. Indicator configuration module 414 instructs the network device to configure visual indicators associated with the three active network links as active and the visual indicators associated with the inactive network links are inactive.

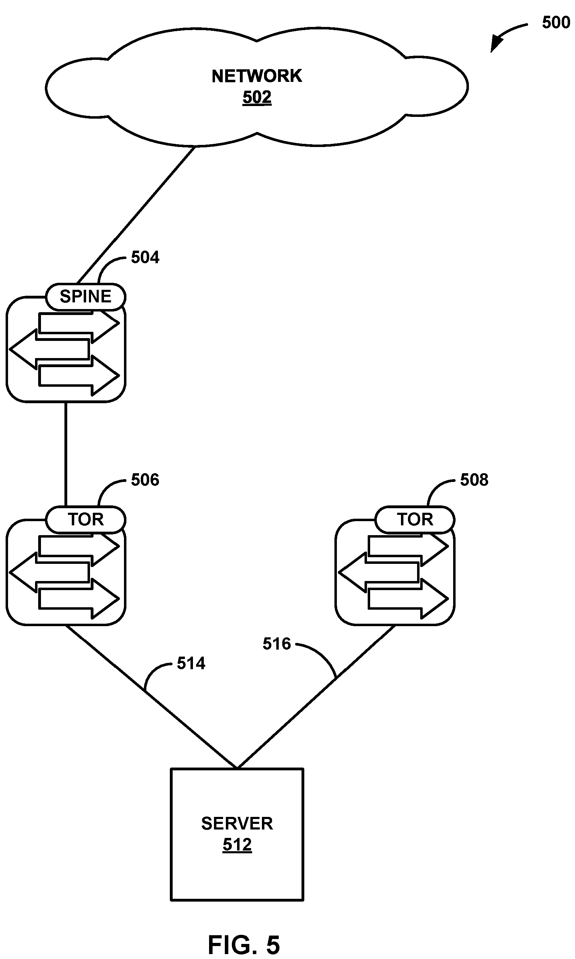

FIG. 5 is a block diagram illustrating a network system 500 including an active route and an inactive network link, in accordance with one or more aspects of this disclosure. For the purposes of clarity, FIG. 5 is described in the context of FIG. 1. For example, network system 500 may include some or all of the components of data center 10.

As seen in FIG. 5, network system 500 includes a network 502, a spine switch 504, a first TOR switch 506, a second TOR switch 508, and a server 512. An active route exists between network 502 and server 512 via spine switch 504, TOR switch 506, and first network link 514 with server 512. Second network link 516 between server 512 and second TOR switch 508 may represent an inactive link because there is not an active route between network 502 and server 512 via second TOR switch 508 and second network link 516.

In this example, controller 24 may obtain network information from one or more network devices of network system 500, such as spine switch 504, TOR switch 506, and TOR switch 508. Controller 24 may obtain network information that includes information regarding the configuration of one or more network links between devices of network system 500, forwarding tables from one or more of the devices of network 500, and/or other types of information.

Controller 24 may determine whether one or more network links are inactive network links. Controller 24 may determine whether a network link is an active network link based on whether the network link is part of an active network route. In the example of FIG. 5, controller 24 may determine that network link 516 is inactive based on network information indicating that network link 516 is not part of an active network route (e.g., that the interface of TOR switch 508 to network link 516 is not part of an active network route to network 502). In some examples, controller 24 may determine network link 516 is part of a network path with relatively low activity (e.g., a path that a comparatively low number of messages traverse compared to other network paths). Controller 24 may cause TOR switch 508 to configure a visual indicator associated with inactive network link 516 as inactive.

Controller 24 may instruct one or more network devices to configure visual indicators as active or inactive. Controller 24 may instruct the network device to configure visual indicators based on determining a network event indicative of network links being active or inactive. Controller 24 may instruct the network device to configure the at least one visual indicator associated with the inactive network link as inactive. In the example of FIG. 5, controller 24 may instruct TOR switch 506 to configure a visual indicator associated with active network link 514 as active.

FIG. 6 is a flow diagram illustrating an example operation 600 for determining inactive network links of a network device, in accordance with one or more techniques in this disclosure. For the purposes of clarity, FIG. 6 is described in the context of FIG. 1. While discussed in the context of specific devices below, any one or more of network devices 14 and/or controller 24 may perform any one or more of the steps of operation 600. For example, a network device, such as TOR switch 16A, may perform a portion of the steps of operation 600 while controller 24 performs the remainder of the steps of operation 600.

A network device may store routes of a network topology, that are learned by messages exchanged in accordance with one or more protocols and/or manually configured, in routing table 602 (e.g., routing information 218 of FIG. 2). The network device may also store information of active interfaces for the network device in router interface list 608. The network device may perform a routing protocol process 604 in which the network device may install active routes into forwarding table 606 (e.g., forwarding information 232 of FIG. 2), which in turn is copied (e.g., by a kernel of the network device) to a packet forwarding engine of the network device. Forwarding table 606 may store entries indicative of an identifier (e.g., name) of an interface to reach the destination (e.g., so-5/0/3.0) and other information.

Controller 24 may obtain information in forwarding table 606 and router interface list 608 (collectively referred to as "network information" in this example) for use in evaluating whether the links of the network device are active. Controller 24 may obtain network information from forwarding table 606 and/or router interface list 608 by polling the network device and/or as part of periodic reporting by the network device. For example, the network device may send information from forwarding table 606 and router interface list 608 to controller 24 every thirty seconds.

Controller 24 may perform active links evaluation process 610 in which controller 24 may determine a network event, such as determining whether the network device has any inactive network links, based on network information obtained from forwarding table 606 and router interfaces list 608. For example, controller 24 may determine inactive network links based on whether active interfaces to the network links in router interfaces list 608 are part of an active route in forwarding table 606. In this example, controller 24 may determine that interface so-5/0/4.0 in router interfaces list 608 is not included in forwarding table 606, and is thus an inactive interface. Controller 24 may store information associated with the inactive interface in inactive interface table 616.

In some examples, controller may obtain link configuration and state data 612 (also referred to as "network information" in this example). Controller 24 may obtain link configuration and state data 612 that includes information regarding the configuration of network links in addition to the state of the network links. For example, controller 24 may obtain link configuration and state data 612 as including information regarding a current configuration of network links of the network device.

Controller 24 may perform link configuration state detection 614 in which controller 24 determines whether network links are incorrectly configured and/or incompletely configured. For example, controller 24 may process the configuration of the network links to determine whether the configuration a given network link is incorrect (e.g., processing the configuration of the links using heuristics to determine if a link is incorrectly configured, comparing the configuration of the given network link to active network links, etc.). Controller 24 may determine whether a link is incompletely configured based on whether the network link is missing a configuration of one or more attributes (e.g., the network link does not include a destination address, the network link not being configured with a next-hop interface, etc.). Controller 24 may determine that one or more network links are not active links based on the network links being incorrectly or incompletely configured. Controller 24 may store information associated with the inactive interface or links in inactive interface table 616.

Controller 24 may periodically update inactive interface table 616 based on a periodic performance of active links evaluation process 610 and/or link configuration state detection 614. Controller 24 may maintain inactive interface table 616 as a table of inactive links that includes an identifier of the interface associated with the inactive network link, an indicator of the state of the network link (e.g., "Up", "Down"), a reference counter of the network link, and a current bandwidth of the network link. Controller 24 may maintain inactive interface table 616 for use in configuring the visual indicators of one or more of network devices 14. In some examples, a network device of network devices 14 may maintain a copy of active link table 616 for network links associated with the network devices.

Controller 24 may instruct one or more network devices to configure visual indicators based on inactive interface table 616. For example, controller 24 may instruct the network devices including interface so-5/0/4.0 to configure a visual indicator associated with interface so-5/0/4.0 as inactive. An indicator management module of the network device (e.g., indicator management module 224 of FIG. 2) may control visual indicators corresponding to inactive network links to be moved to an inactive state. Configuring visual indicators corresponding to inactive network links to the inactive state may involve deactivating the visual indicators so they do not draw power. Visual indicators corresponding to inactive network links might be less important for providing information concerning a configuration and/or state of network devices and/or network links of the network devices within data center 10 as compared with visual indicators corresponding to network links that are part of active routes. As such, the visual indicators corresponding to inactive network links may be deactivated to reduce the amount of power consumed by network devices of the data center.

While the example in FIG. 6 is described with respect to controller 24 performing active links evaluation process 610 and link configuration state detection 614, the network device may alternatively, or in combination with controller 24, perform active links evaluation process 610 and/or link configuration state detection 614.

FIG. 7 is a flow diagram illustrating an example operation for determining configurations of visual indicators based on stability of network links, in accordance with one or more techniques of this disclosure. For the purposes of clarity, FIG. 7 is described in the context of FIG. 1. For instance, controller 24 may perform one or more of the steps of operation 700. In some examples, a network device of network devices 14 may perform one or more of the steps of operation 700.

Controller 24 starts operation 700 (702). Controller 24 may start operation in response to an indication from a network administrator and/or in response to receiving information from a network device. In an example, controller 24 receives a request to configure visual indicators based on the stability of network links within data center 10 and starts operation 700 based on receiving the request. Controller 24 may perform operation 700 to determine visual indicators that are stable and may not need to be powered on for diagnostic issues as part of determining network events for data center 10. For example, network administrators may use visual indicators to debug connectivity issues. Some visual indicators may remain powered on even when there are no issues in the network. When there are no active alarms for a network link, it is may be less probable that a network administrator needs to view the status of the network devices using the visual indicators.

Controller 24 starts a loop timer (704). Controller 24 may start the loop timer in response to the rest of the loop timer and/or based on initiating operation 700 (e.g., "START" as illustrated in FIG. 7). Controller 24 may start the loop timer as part of periodically determining whether network links are stable and whether the visual indicators associated with the network links should be configured as inactive. Controller 24 use the loop timer to wait and determine stable network links on a periodic basis.

Controller 24 may collect metrics that are based on scraped statistics based on the expiration of the loop timer (706). Controller 24 may collect statistics organized into metrics that include network events, alarms, alerts, administrator interactions (e.g., an administrator viewing the status of a network link in a user interface, an administrator querying a network link in a user interface, etc.) for one or more network links within data center 10. Controller 24 may scrape statistics relevant to the metrics on an iterative basis. Controller 24 may poll one or more of network devices 14 for statistics relevant to the metrics. In an example, controller 24 sends a poll to TOR switch 16A for statistics relevant to the metrics. Controller 24 receives statistics from TOR switch 16A and organizes the statistics according to predetermined metrics (e.g., network events, user interface queries, etc.). Controller 24 may store the metrics in a time series database. For example, controller 24 may store the metrics organized by each network device of network devices 14 in a time series database. Controller 24 may store a metrics for each network device for a predetermined period of time. Controller 24 may purge metrics older than a predetermined age from the time series database.

Controller analyzes the metrics (708). Controller 24 may analyze the metrics using descriptive analysis and/or predictive analysis. Controller 24 may analyze the metrics using a descriptive analysis that includes deriving stability scores for a network link at a current time based on data up to the current time. Additionally, or alternatively, controller 24 may use ML models, such as an automatic regression machine learning model, to predict a stability score of a network link at a future timestamp using past metrics data. In an example, controller 24 obtains statistics relevant to TOR switch 16A. Controller 24 applies an automatic regression ML model to the statistics to generate a predicted stability score for a network link of TOR switch 16A.

As part of analyzing the metrics, controller 24 may determine an activeness score, a turbulence score, a stability score, or any combination thereof corresponding to visual indicators of network links based on alert statistics or alarm statistics. Controller 24 may determine an activeness score, a turbulence score, a stability score, or any combination thereof corresponding to visual indicators of network links based on metrics that include any combination of user view statistics, user query statistics, alarm statistics, and/or alert statistics among other types of statistics.

In some examples, controller 24 may use a descriptive analytical model that represents an analytical model for deriving a pattern or a trend in alerts or alarm statistics. Controller 24 may use one or more types of descriptive analytical models to process statistics corresponding to network links up to a current time. For example, controller 24 may use data inputs that include an average count of severity-2 alarms over the last two hours, an average count of severity-5 alarms over the last five hours, an average count of views or queries of a network link over last two hours, or any combination thereof. Controller 24 may process the statistics relevant to the metrics using the descriptive analytical model. In an example, controller 24 organizes statistics based on the metrics, where the statistics include statistics of a network device over two hours immediately preceding a current point in time. Controller 24 applies the descriptive analytical model to the statistics.

Controller 24 may use a descriptive analytical model that includes the below equation to derive the stability scores.

$$sc(nl, t) = lp\_maximize(derived\_alarm\_count, derived\_alarm\_severity, derived\_view\_count))$$

In the above function, "sc" may represent a stability score of a network link "nl" at timestamp "t." Controller 24 may use regular descriptive analytical models that use range, quartiles, absolute deviation, and variance to detect a variability of the time-series data in a period of time preceding the present. Based on the derived analytics, controller 24 may determine an activeness of the visual indicators in the period of time preceding the present. For example, controller 24 may use the above equation to derive stability score for a given network link indicative of a likelihood that the network link will experience an issue. In some examples, controller 24 may derive the stability score for network links using linear programming methods to derive a maximum stability score value based on the predicted metric values.

In some examples, controller 24 may use one or more ML models, such as an automatic regression machine learning model to predict a pattern or a trend of events, alarms, view statistics of a network links for a future period of time. Controller may use one or more types of ML models, such as deep-learning models, Q-learning models, neural nets, and/or other types of ML models. An Auto-Regression-Integrated-Moving-Average (ARIMA) is presented below.

$$PC(nl, t) = c + \phi1AC^{\wedge\prime}\, t - 1 + \cdots + \phi pAC^{\wedge\prime}\, t - p + \theta1\varepsilon t - 1 + \cdots + \theta q\varepsilon t - q + \varepsilon t$$

$$PE(nl, t) = c + \phi1AE^{\wedge\prime}\, t - 1 + \cdots + \phi pAE^{\wedge\prime}\, t - p + \theta1\varepsilon t - 1 + \cdots + \theta q\varepsilon t - q + \varepsilon t$$

$$PV(nl, t) = c + \phi1AV^{\wedge\prime}\, t - 1 + \cdots + \phi pAV^{\wedge\prime}\, t - p + \theta1\varepsilon t - 1 + \cdots + \theta q\varepsilon t - q + \varepsilon t$$

In the above equation, "PC" may represent a predicted alarm count for a given network link ("nl") at a given time ("t"), "PE" may represent a predicted event count for a given network link at a given time, and "PV" may represent a predicted view count for a given network link at a given time. In addition, "AC" may represent a past aggregated alarm count, "AE" may represent a past aggregated event count, "AV" may represent a past aggregated view count, "p" may represent the order of the autoregressive component, "d" may represent the degree of first differencing involved, "q" may represent the order of the moving average part, and "εt" may represent white noise. Controller 24 may provide statistics relevant to each metric as input to the ML model and receive a stability score as output. Controller 24 may determine a future stability score based on the predicted statistics for the network link. In an example, controller 24 organizes statistics of TOR switch 16A based on the metrics, where the statistics include statistics of TOR switch 16A over ten days preceding a current point in time. Controller 24 provides the statistics to the ML model as input.

Controller 24 may use an objective function that maximizes a stability score of network links when a count of alarm, events, user views or queries associated with the links are less. Controller 24 may use the objective function in combination with the descriptive analytical model and/or the ML models. Controller 24 may use an objective function like the one provided below.

$$sc(nl, t) = lp\_maximize(PV, PE, PV)$$

In the above function, "sc" may represent a stability score of network link "nl" at timestamp "t." Controller 24 may derive stability scores for a network link by processing statistics by applying an objective function like the one illustrated above. In an example, controller 24 obtains network information that includes statistics from TOR switch 16A. Controller 24 applies an objective function to the statistics and generates a stability score for network links of TOR switch 16A.

Controller 24 derives stability scores (710). Controller 24 may derive stability scores based on a pattern derived or predicted using the descriptive analytical model or the ML model, respectively. Controller 24 may derive stability scores that are indicative of the stability of a network link (e.g., indicative of the likelihood of whether the network link will not experience an issue for a given period of time). In an example, controller 24 applies an ML model to statistics regarding a network link of TOR switch 16A that consistently experiences alarms. Controller 24 uses the ML model to generate a stability score that is indicative of the probability that the network link will be stable. Controller 24 generates a relatively low stability score for the link that is indicative of the relatively high likelihood that the network link will experience issues.

Controller 24 determines configurations for visual indicators (712). Controller 24 may determine configurations of visual indicators based on the stability scores for each network link. In some examples, controller 24 may provide the stability scores to network device 14 for network devices 14 to determine a configuration of visual indicators. In additional examples, visual indicator module 32 may perform time-bound transitioning state of visual indicators of network links based on the stability score.

Controller 24 may generate configuration of visual indicators based on the stability scores meeting a threshold. Controller 24 may compare the stability scores of the network links to a predetermined threshold to determine whether a visual indicator should be configured as active or inactive. Controller 24 may determine that visual indicators associated with network links that satisfy the predetermined threshold should be configured as inactive (e.g., that the network links are unlikely to have issues to be indicated via the visual indicators) and that visual indicators associated with network links that do not satisfy the predetermined threshold should be configured as active (e.g., that the network links are likely to have issues to be indicated via the visual indicators). In an example, controller 24 determines a stability score for a particular network link of TOR switch 16A. Controller 24 determines that the stability score for the particular network link satisfies a predetermined threshold. Controller 24 determines a configuration of visual indicators that includes a configuration of visual indicator 17A of TOR switch 16A associated with the particular network link as inactive based on the stability score satisfying the threshold. Controller 24 may use a predetermined threshold that is configured by a network administrator and/or determined by controller 24.

Controller 24 may associate network links with visual indicators as part of determining configurations of visual indicators. Controller 24 may associate network links with visual indicators to determine which visual indicators should be configured as active and which visual indicators should be configured as inactive. In an example, controller 24 determines that a particular network link has a relatively high stability score. Controller 24 associates the particular network link with a particular visual indicator. Based on the association, controller 24 determines a configuration of visual indicators with the visual indicator associated with the particular network link configured as inactive. Controller 24 may use information obtained from network devices 24, such as configuration information of the network devise, to associate the network links with visual indicators.

Controller 24 pushes the visual indicator configuration (714). Controller 24 may push the visual indicator configuration to one or more of network devices 14. For example, controller 24 may push a first visual indicator configuration for TOR switch 16A to TOR switch 16A and a second visual indicator configuration for visual indicators 19M of chassis switch 18M to chassis switch 19M. Controller 24 may push individual visual indicator configurations for each of network devices 14.

Controller 24 may reset the timer in response to pushing the configuration of visual indicators. Controller 24 may reset the timer to create a delay before collecting statistics and generating another configuration of visual indicators. Controller 24 may use the delay resulting from the timer as a form of time dampening for generating configurations of visual indicators. For example, controller 24 may use the delay resulting from waiting for the timer to control the frequency of changes to visual indicators.

FIG. 8 is a block diagram illustrating an example system 800 for determining configurations of visual indicators based on network events, in accordance with one or more techniques of this disclosure. For the purposes of clarity, FIG. 8 is described in the context of FIG. 1.

Data center 10 may include common event bus 802. Common event bus 802 may be a software component of data center 10 executed by one or more devices, such as controller 24, one or more of network devices 14, and/or other devices of data center 10. For example, common event bus 802 may be a software component executed by a network management system of data center. Common data bus 802 may be vendor and device agnostic. For example, common data bus 802 may receive information provided by multiple types of devices manufactured by different vendors.

In the example of FIG. 8, network devices 14 of data center 10 may report network events to common event bus 802. Network devices 14 may report network events that include hot plug events (e.g., events relating to hot plugging of network equipment) and other types of network events. Examples of hot-plug events include detecting the removal of a network cable by a network administrator, inserting or removing a USB/SD card drive, inserting or removing a network card, among other examples. Network devices 14 or event storage devices which can generate hardware hot-plug events may post any hardware hot-plug events to the centralized event bus of common event bus 802. For example, a TOR switch of network devices 14 may report a hot plug event to common event bus 802 in response to detecting an administrator plugging an Ethernet cable into a port of the TOR switch.

Common event bus 802 may provide information regarding network events to DC event queue 804 of controller 24. DC event queue 804 may be a data repository and/or data structure maintained by controller 24 for storing events. Controller 24 may use DC event queue 804 as a cache for network events. For example, controller 24 may store information regarding network events in DC event queue 804 organized in order of receipt and process network events oldest to newest. In some examples, DC event queue 804 may be included in another component of controller 24, such as event module 812 or a network event storage, such as network information storage 404 as illustrated in FIG. 4.

Controller 24 may process network events stored in DC event queue 804 using event module 812. Event module 812 may represent an example implementation of event module 412 as illustrated in FIG. 4 and provide similar functionality. Event module 812 may process network events received from network devices 14 and stored in DC event queue 804 to determine whether an administrator is in proximity to network devices. For example, event module 812 may use the network events from DC events queue 804 to infer or determine whether an administrator is likely nearby the network device that experienced a hot-plug event. Event module 812 may determine that an administrator is likely not within visual range of a network device based on a lack of hot-plug events at a network (e.g., that the administrator has not interacted with the network device itself and is thus unlikely to be within visual range of the network device). Alternatively, event module 812 may determine that an administrator is likely within visual range of a network device based the occurrence of one or more hot plug events over a given duration of time. Based on the determination that the administrator is not likely to be within visual range of the network device, event module 812 may cause indicator configuration module 814 to configure visual indicators of devices that are not within visual range of the administrator to be inactive.

In some examples, event module 812 may cause indicator configuration module 814 to deactivate a visual indicator for a given duration (e.g., to avoid false positive cases in which a network administrator may be around the network device without triggering any hot plug events). For example, event module 812 may configure visual indicators in an inactive state for a calculated duration or until event module 812 makes a subsequent determination of whether an administrator is in proximity to the network devices. In some examples, event module 812 may configure visual indicators to be in an active state in response to detecting a hot plug event. =

In some examples, event module 812 may determine related network links affected by a network event to configure the visual indicators associated with the related network links. As one example, event module 812 may determine a network event, such as a network link failure to a network link of a network device. Event module 812 may determine other related network links associated with the network link that has experienced the network event, such as network links associated with a VLAN including the network link experiencing the network event. For example, event module 812 may use information about the configuration or/and topology of networks within data center 10 to determine a VLAN associated with the network link that experienced the network event, and determine the links associated with the VLAN. Event module 812 may cause indicator configuration module 814 to generate configurations of visual indicators associated with the related network links of the VLAN to be in an active state. Indicator configuration module 814 may be similar to indicator configuration module 414 as illustrated in FIG. 4 and provide similar functionality. For example, indicator configuration module 814 may determine configurations of visual indicators based on the identification of network events.

In some examples, indicator configuration module 414 may determine a configuration of visual indicators where all visual indicators of a network device are configured as inactive except for those associated with links of a VLAN where one of the links has experienced a network event. Indicator configuration module 414 may configure only visual indicators associated with VLANs that have experienced a network event as active to reduce to power consumption by other visual indicators and to only power visual indicators that are useful for diagnosis and/or within visual range of an administrator.

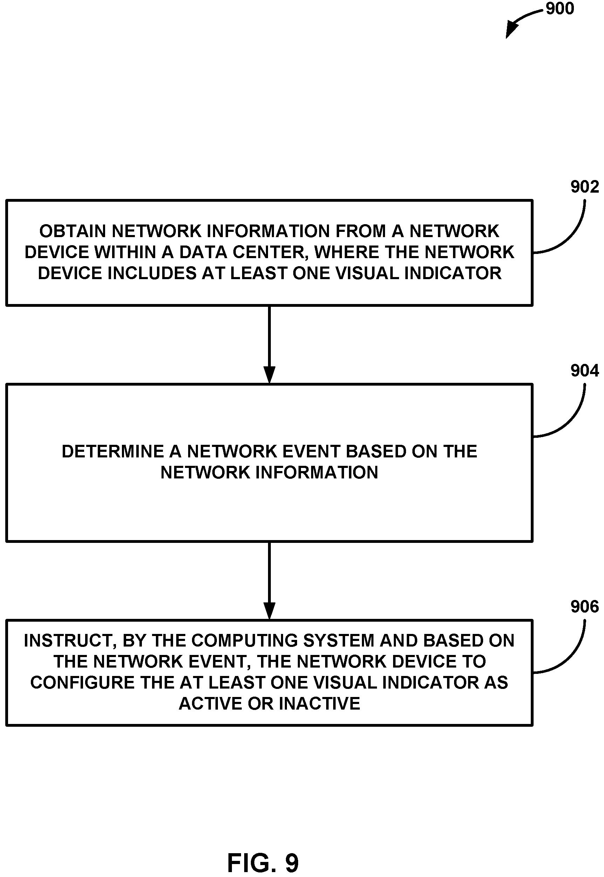

FIG. 9 is a flowchart illustrating an example operation 900 for determining visual indicator configurations based on network events. For the purposes of clarity, FIG. 9 is described in the context of FIG. 1.

A computing system, such as controller 24, obtains network information from a network device, such as one of network devices 14, within data center 10, where the network device includes at least one visual indicator, such as one of visual indicators 17, 19 (902). Controller 24 may obtain the network information from the network device by polling the network device and/or causing the network device to periodically report network information. Controller 24 may obtain the network information from a plurality of network devices 14 within data center 10. Controller 24 may obtain network information that includes forwarding information of network devices 14, configuration information of network devices 14, statistics regarding the stability of network links of network devices 14, and/or other network information.

Controller 24 determines a network event based on the network information (904). Controller 24 may control visual indicators 17, 19 of network devices 14 within data center 10, or a set of data centers, such as by deactivating a visual indicator for an inactive network link, stable network links, and/or if a network administrator is not in physical proximity to network devices of the data center, to reduce the amount of power consumed by network devices of the data center. Controller 24 may determine network events using one or more techniques, such as determining inactive network links based on the inactive network links being incorrectly/incompletely configured and/or being part of inactive network routes, determining network links that are stable based on the stability scores associated with the network links, and/or determining that an administrator is not within a proximity of a network device based on absence of hot-plug events.

Controller 24 instructs, based on the network event, the network device to configure the at least one visual indicator as active or inactive (906). Controller 24 may instruct the network device to configure the at least one visual indicator using the network event as representative as to whether the visual indicator should be active. Controller 24 may configure visual indicators as inactive based on stability scores for a network link being above a predetermined threshold, a network link being inactive, and/or based on an administrator not being in a proximity of a network device. In an example, controller 24 determines a configuration of visual indicator 17N as inactive based on a stability score for a network link associated with visual indicator 17N being above a predetermined threshold.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable medium comprising instructions that, when executed, cause a processor to perform one or more of the methods described above. For example, the computer-readable medium may store and/or provide such instructions for execution by a processor. A computer readable medium may be provided as a computer-readable data storage medium and/or a computer readable transmission medium. A computer-readable transmission medium (by which such instructions may be conveyed) may include carrier waves, transmission signals or the like. A computer-readable transmission medium may convey instructions between components of a single computer system and/or between plural separate computer systems.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media.

In some examples, a computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, three has been described a computing system that includes a memory and programmable processors in communication with the memory. The computing system is configured to obtain network information from a network device within a datacenter, wherein the network device includes at least one visual indicator. The computing system is further configured to determine a network event based on the network information. The computing system is further configured to instruct, based on the network event, the network device to configure the at least one visual indicator as active or inactive.

Further examples are set out in the following numbered clauses.

Clause 1. A computing system, comprising: memory; and one or more programmable processors in communication with the memory, wherein the one or more programmable processors are configured to: obtain network information from a network device within a datacenter, wherein the network device includes at least one visual indicator; determine a network event based on the network information; and instruct, based on the network event, the network device to configure the at least one visual indicator as active or inactive.

Clause 2. The computing system of clause 1, wherein the network information includes at least one of forwarding information of the network device or configuration information of the network device, wherein to determine the network event, the one or more programmable processors are further configured to: determine, based on the at least one of the forwarding information or the configuration information, that at least one network link associated with the network device is an inactive network link, wherein the at least one visual indicator is associated with the inactive network link, and wherein to instruct the network device to configure the at least one visual indicator as active or inactive, the one or more programmable processors are further configured to instruct the network device to configure the at least one visual indicator associated with the inactive network link as inactive.

Clause 3. The computing system of clause 2, wherein to determine that the at least one network link is an inactive network link, the one or more programmable processors are further configured to: determine, based on the configuration information, that the at least one network link is at least one of: incompletely configured, or incorrectly configured.

Clause 4. The computing system of clause 2 or 3, wherein to determine that the at least one network link is an inactive network link, the one or more programmable processors are further configured to: determine, based on the forwarding information, that the at least one network link is included in a network path with relatively low activity.

Clause 5. The computing system of any of clauses 1-4, wherein to determine the network event, the one or more programmable processors are further configured to: determine, based on providing the network information to a machine learning (ML) model, a stability score of at least one network link associated with the network device; and determine, based on determining the stability score of the at least one network link satisfies a predetermined threshold, that the at least one network link is an inactive network link, wherein the at least one visual indicator is associated with the inactive network link, and wherein to instruct the network device to configure the at least one visual indicator as inactive or active, one or more programmable processors are further configured to instruct the network device to configure the at least one visual indicator as inactive.

Clause 6. The computing system of clause 5, wherein the network information includes at least one of: alert statistics of the at least one network link, alarm statistics of the at least one network link, view statistics of a user monitoring the status of the at least one network link, or query statistics of the link.

Clause 7. The computing system of any of clauses 1-6, wherein to determine the network event, the one or more programmable processors are further configured to: determine a virtual local area network (VLAN) associated with the network event, wherein the VLAN includes a plurality of network links including the at least one network link, and wherein to instruct the network device to configure the at least one visual indicator, the one or more programmable processors are further configured to: configure each visual indicator associated the plurality of network links of the VLAN in an active state and each visual indicator not associated with the VLAN in an inactive state.

Clause 8. The computing system of clause 7, wherein the network event is a hot plug network event.

Clause 9. The computing system of clause 8, wherein the one or more programmable processors are further configured to: determine, based on the determination of the hot plug network event, that an administrator is not within a proximity of the network device, and wherein to instruct the network device to configure the at least one visual indicator, the one or more programmable processors are configured to configure, based on the determination that the administrator is not within the proximity of the network device, the at least one visual indicator in an inactive state.

Clause 10. The computing system of clause 7, 8 or 9, wherein the one or more programmable processors are further configured to: apply a time domain filter to the network event, wherein the time domain filter filters a plurality of network events based on a corresponding duration of each network event of the plurality of network events.

Clause 11. The computing system of any of clauses 1-11, wherein the network device comprises the one or more programmable processors.

Clause 12. A method, comprising: obtaining, by a computing system, network information from a network device within a data center, wherein the network device includes at least one visual indicator; determining, by the computing system, a network event based on the network information; and instructing, by the computing system and based on the network event, the network device to configure the at least one visual indicator as active or inactive.

Clause 13. The method of clause 12, wherein the network information includes at least one of forwarding information of the network device or configuration information of the network device, wherein determining the network event further comprises: determining, based on the at least one of the forwarding information or the configuration information, that at least one network link associated with the network device is an inactive network link, wherein the at least one visual indicator is associated with the inactive network link, and wherein instructing the network device to configure the at least one visual indicator as active or inactive further comprises instructing the network device to configure the at least one visual indicator associated with the inactive network link as inactive.

Clause 14. The method of clause 13, wherein determining that the at least one network link is an inactive network link further comprises: determining, based on the configuration information, that the at least one network link is at least one of: incompletely configured, or incorrectly configured.

Clause 15. The method of clause 13 or 14, wherein determining that the at least one network link is an inactive network link further comprises: determining, based on the forwarding information, that the at least one network link is included in a network path with relatively low activity.

Clause 16. The method of any of clauses 12-15, wherein determining the network event further comprises: determining, based on providing the network information to a machine learning (ML) model, a stability score of at least one network link associated with the network device; and determining, based on determining the stability score of the at least one network link satisfies a predetermine threshold, that the at least one network link is an inactive network link, wherein the at least one visual indicator is associated with the inactive network link, and wherein instructing the network device to configure the at least one visual indicator as inactive or active further comprises instructing the network device to configure the at least one visual indicator as inactive.

Clause 17. The method of clause 16, wherein the network information includes at least one of: alert statistics of the at least one network link, alarm statistics of the at least one network link, statistics regarding monitoring the status of the at least one network link by an administrator, or query statistics of the link.

Clause 18. The method of any of clauses 12-17, wherein determining the network event further comprises: determining a virtual local area network (VLAN) associated with the network event, wherein the VLAN includes a plurality of network links including the at least one network link, and wherein instructing the network device to configure the at least one visual indicator further comprises: configuring each visual indicator associated the plurality of network links of the VLAN in an active state and each visual indicator not associated with the VLAN in an inactive state.

Clause 19. The method of any of clauses 12-18, further comprising: determining, based on the determination of a hot plug network event, that an administrator is not within a proximity of the network device, and wherein instructing the network device to configure the at least one visual indicator comprises configuring, based on the determination that the administrator is not within the proximity of the network device, the at least one visual indicator in an inactive state.

Clause 20. Computer-readable media that includes instructions configured to cause processing circuitry to: obtain network information from a network device within a datacenter, wherein the network device includes at least one visual indicator; determine a network event based on the network information; and instruct, based on the network event, the network device to configure the visual indicator as active or inactive.

## Claims

1. A computing system, comprising:

   memory; and
   one or more programmable processors in communication with the memory, wherein the one or more programmable processors are configured to:

   obtain network information from a network device within a datacenter, wherein the network device includes at least one visual indicator;
   determine a network event based on the network information; and
   instruct, based on the network event, the network device to configure the at least one visual indicator as active or inactive.

2. The computing system of claim 1,

   wherein the network information includes at least one of forwarding information of the network device or configuration information of the network device, wherein to determine the network event, the one or more programmable processors are further configured to:
   determine, based on the at least one of the forwarding information or the configuration information, that at least one network link associated with the network device is an inactive network link, wherein the at least one visual indicator is associated with the inactive network link, and
   wherein to instruct the network device to configure the at least one visual indicator as active or inactive, the one or more programmable processors are further configured to instruct the network device to configure the at least one visual indicator associated with the inactive network link as inactive.

3. The computing system of claim 2, wherein to determine that the at least one network link is an inactive network link, the one or more programmable processors are further configured to:
   determine, based on the configuration information, that the at least one network link is at least one of: incompletely configured, or incorrectly configured.

4. The computing system of claim 2 or 3, wherein to determine that the at least one network link is an inactive network link, the one or more programmable processors are further configured to:
determine, based on the forwarding information, that the at least one network link is included in a network path with relatively low activity.

5. The computing system of any of claims 1-4,

   wherein to determine the network event, the one or more programmable processors are further configured to:

   determine, based on providing the network information to a machine learning (ML) model, a stability score of at least one network link associated with the network device; and
   determine, based on determining the stability score of the at least one network link satisfies a predetermined threshold, that the at least one network link is an inactive network link, wherein the at least one visual indicator is associated with the inactive network link, and

   wherein to instruct the network device to configure the at least one visual indicator as inactive or active, one or more programmable processors are further configured to instruct the network device to configure the at least one visual indicator as inactive.

6. The computing system of claim 5, wherein the network information includes at least one of

   alert statistics of the at least one network link,
   alarm statistics of the at least one network link,
   view statistics of a user monitoring the status of the at least one network link, and query statistics of the link.

7. The computing system of any of claims 1-6,

   wherein to determine the network event, the one or more programmable processors are further configured to:
   determine a virtual local area network (VLAN) associated with the network event, wherein the VLAN includes a plurality of network links including the at least one network link, and
   wherein to instruct the network device to configure the at least one visual indicator, the one or more programmable processors are further configured to:
   configure each visual indicator associated the plurality of network links of the VLAN in an active state and each visual indicator not associated with the VLAN in an inactive state.

8. The computing system of claim 7, wherein the network event is a hot plug network event.

9. The computing system of claim 8,

   wherein the one or more programmable processors are further configured to:
   determine, based on the determination of the hot plug network event, that an administrator is not within a proximity of the network device, and
   wherein to instruct the network device to configure the at least one visual indicator, the one or more programmable processors are configured to configure, based on the determination that the administrator is not within the proximity of the network device, the at least one visual indicator in an inactive state.

10. The computing system of claim 7, 8 or 9, wherein the one or more programmable processors are further configured to:
apply a time domain filter to the network event, wherein the time domain filter filters a plurality of network events based on a corresponding duration of each network event of the plurality of network events.

11. The computing system of any of claims 1-11, wherein the network device comprises the one or more programmable processors.

12. A method, comprising:

   obtaining, by a computing system, network information from a network device within a data center, wherein the network device includes at least one visual indicator;
   determining, by the computing system, a network event based on the network information; and

instructing, by the computing system and based on the network event, the network device to configure the at least one visual indicator as active or inactive.

13. The method of claim 12, further comprising steps corresponding to the functionality set out in any of claims 2 to 11.

14. A computer-readable medium comprising instructions which, when executed b processing circuitry, cause a programmable device to become configured as the system of any of claims 1-11 or to carry out the method of any of claims 12-13.

**FIG. 1**

**NETWORK DEVICE**
**200**

**CONTROL UNIT**
**202**

**ROUTING UNIT (CONTROL PLANE)**
**204**

**CONFIGURATION INTERFACE**
**222**

**INDICATOR MANAGEMENT MODULE**
**224**

**ROUTING INFORMATION**
**218**

**CONFIGURATION INFORMATION**
**220**

**EVENTS/ALARMS**
**221**

**PROTOCOLS**
**214**

IGP **215**

BGP **216**

BFD **217**

**208**

**MICRO-PROCESSOR**
**206**

**KERNEL**
**210**

**INDICATOR INFORMATION**
**219**

**FORWARDING UNIT (DATA PLANE)**
**230**

**FORWARDING INFORMATION**
**232**

**INTERFACES**
**234**

**IFC**
**240A**
**217A**

**IFC**
**240B**
**217B**

**IFC**
**240N**
**217N**

242A  244A  242B  244B  242N  244N

**FIG. 2**

CONTROLLER
300

PROCESSOR(S)
302

COMMUNICATION UNIT(S)
304

USER INTERFACE DEVICE(S)
306

COMM.
CHANNEL(S)
308

STORAGE DEVICE(S)
310

INDICATOR
MANAGEMENT
MODULE
324

NETWORK
CONFIGURATION
MANAGER
314

OS
312

FIG. 3

INDICATOR MANAGEMENT MODULE
400

INACTIVE LINK
MODULE
406

NETWORK
INFORMATION
MODULE
402

LINK STABILITY MODULE
408

ML MODEL(S)
410

EVENT MODULE
412

INDICATOR
CONFIGURATION
MODULE
414

NETWORK
INFORMATION
STORAGE
404

FIG. 4

FIG. 5

## ROUTING TABLE 602

| Number of Routes | route-destination | via | interface-name |
|---|---|---|---|
| 5 routes (4 active, 1 holddown, 0 hidden) | 10.0.0.1/24 | so-5/0/3.0 | so-5/0/3.0 |

**ROUTING PROTOCOL PROCESS 604**

## FORWARDING TABLE 606

| Destination | Next Hop | Next-hop interface | Weight |
|---|---|---|---|
| so-5/0/3.0 | Up | 7 | 155Mbps |

## ROUTER INTERFACE LIST 608

| Interface | State | RefCount | Bandwidth |
|---|---|---|---|
| so-5/0/3.0 | Up | 7 | 155Mbps |
| so-5/0/4.0 | Up | 0 | 0Mbps |

**LINK CONFIGURATION AND STATE DATA 612**

**LINK CONFIGURATION STATE DETECTION 614**

**ACTIVE LINKS EVALUATION PROCESS 610**

## INACTIVE INTERFACE TABLE 616

| Interface | State | RefCount | Bandwidth |
|---|---|---|---|
| so-5/0/4.0 | Up | 0 | 0Mbps |

## FIG. 6

EP 4 521 696 A1

FIG. 7

FIG. 8

900

902

OBTAIN NETWORK INFORMATION FROM A NETWORK
DEVICE WITHIN A DATA CENTER, WHERE THE NETWORK
DEVICE INCLUDES AT LEAST ONE VISUAL INDICATOR

904

DETERMINE A NETWORK EVENT BASED ON THE
NETWORK INFORMATION

906

INSTRUCT, BY THE COMPUTING SYSTEM AND BASED ON
THE NETWORK EVENT, THE NETWORK DEVICE TO
CONFIGURE THE AT LEAST ONE VISUAL INDICATOR AS
ACTIVE OR INACTIVE

FIG. 9

Europäisches
Patentamt

European
Patent Office

Office européen
des brevets

# EUROPEAN SEARCH REPORT

**Application Number**

EP 24 19 9416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/123578 A1 (WRAY MELVYN JOHN [GB]) 20 May 2010 (2010-05-20) | 1-4,7-14 | INV. H04L41/0833 |
| Y | * paragraph [0004] - paragraph [0041]; claims; figures * | 5,6 | H04L41/00 H04L43/0811 H04L12/12 |
| X | US 2011/296162 A1 (PAKENHAM EUGENE [US]) 1 December 2011 (2011-12-01) | 1-4,7-14 | ADD. |
| Y | * paragraph [0012] - paragraph [0026]; claims; figures * | 5,6 | H04L41/06 H04L41/16 |
| X | US 2010/164736 A1 (BYERS CHARLES CALVIN [US] ET AL) 1 July 2010 (2010-07-01) | 1-4,7-14 | |
| Y | * paragraph [0002] - paragraph [0077]; claims; figures * | 5,6 | |
| Y | US 11 438 211 B1 (LYUBOMIRSKY ILYA [US] ET AL) 6 September 2022 (2022-09-06) * column 2, line 60 - column 9, line 30; claims; figures * | 5,6 | |
| X,P | US 2024/231463 A1 (KARUPPIAH KANNAN [US] ET AL) 11 July 2024 (2024-07-11) | 1-4,7-14 | TECHNICAL FIELDS SEARCHED (IPC) |
| Y,P | * paragraph [0020] - paragraph [0068]; claims; figures * | 5,6 | H04L |

The present search report has been drawn up for all claims

| Place of search | Date of completion of the search | Examiner |
|---|---|---|
| Munich | 9 January 2025 | Ceccarini, Giulio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 9416

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2025

| Patent document cited in search report | | | Publication date | Patent family member(s) | | | Publication date |
|---|---|---|---|---|---|---|---|
| US 2010123578 | A1 | | 20-05-2010 | EP | 2366175 | A1 | 21-09-2011 |
| | | | | JP | 2012509527 | A | 19-04-2012 |
| | | | | US | 2010123578 | A1 | 20-05-2010 |
| | | | | WO | 2010057178 | A1 | 20-05-2010 |
| US 2011296162 | A1 | | 01-12-2011 | CN | 102334084 | A | 25-01-2012 |
| | | | | EP | 2391930 | A1 | 07-12-2011 |
| | | | | US | 2011296162 | A1 | 01-12-2011 |
| | | | | WO | 2010098744 | A1 | 02-09-2010 |
| US 2010164736 | A1 | | 01-07-2010 | NONE | | | |
| US 11438211 | B1 | | 06-09-2022 | NONE | | | |
| US 2024231463 | A1 | | 11-07-2024 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202341060923

- US 82344724